# EUROPEAN PATENT SPECIFICATION

(11) **EP 2 891 320 B1**
(45) Date of publication and mention of the grant of the patent: **03.03.2021**
(21) Application number: 13759467.7
(22) Date of filing: 30.08.2013
(51) Int. Cl.: H04N 21/462, H04N 21/482

(54) **ELECTRONIC MEDIA CONTENT GUIDE**
ELEKTRONISCHER MEDIENINHALTSLEITFADEN
GUIDE DE CONTENU MULTIMÉDIA ÉLECTRONIQUE

(30) Priority: 31.08.2012 EP 12182677
(43) Date of publication of application: 08.07.2015
(73) Proprietor: FUNKE TV Guide GmbH, 20457 Hamburg (DE)
(72) Inventor: SCHINDLER, Jörg, 12587 Berlin (DE); ZIER, Thomas, 13465 Berlin (DE); MÜLLER-LOEFFELHOLZ, Georg, 13088 Berlin (DE)
(74) Representative: Eisenführ Speiser
(86) International application number: PCT/EP2013/068037
(87) International publication number: WO 2014/033284

(56) References cited:
- WO-A2-01/78383
- US-A1- 2011 289 067

## Description

The invention relates to an electronic media client comprising, as a component, an electronic media content guide that provides for some known EPG (electronic program guide) functionality and more. The electronic media content guide comprises a data interface for receiving content information data from a plurality of media content sources, a graphical interface generator for generating a graphical user interface for displaying media content item information, a user input interface for receiving user inputs and a media storage and playback controller. The electronic media content guide preferably is a component of an electronic media client.

In general, it can be distinguished between real media content sources and virtual media content source. The graphical interface generator is configured to generate a representation of media content sources comprising at least one real media content source and at least one virtual media source. To the user of the electronic media client, a media content source is represented by a media channel, thus, the user is provided with real media channels and virtual media channels, representing real media sources and virtual media sources, respectively. Although the media content items of the sequence of media content items that form a virtual media channel may originate from a plurality of real media content sources, in the user's I they appear to be provided by one single virtual content source. Therefore, the terms "virtual media channel" and "virtusl media source are used synonymously in the present disclosure.

Real media content sources are for instance broadcasting television networks, media on demand, e.g. video on demand (VOD) or internet media streaming platforms. Broadcasting media content sources are also referred to as linear media content sources because the media content items are broadcasted with respect to time flow by the broadcasting station without allowing interactions of the receiving stations, e.g. electronic media clients, of the media content items. In other words, it does not matter whether an electronic media client is tuned in a broadcasted (linear) media channel or not, the channel will be broadcasted anyway. An internet streaming platform is a non-linear media content source, because the media content items will only be streamed when the client has sent a respective request to the internet streaming platform. However, in case of live internet streaming, the media content items are streamed like broadcasted media content items with respect to time flow, wherein the streaming is initiated by the client. Therefore, a live internet streaming platform is a non-linear media content source. Other non-linear real media content sources are e.g. internet databases or video on demand platforms.

Virtual media content sources comprise compilations of media content items from different real media sources, wherein the real media sources can be linear and/or non-linear. However, according to the invention, such virtual media sources behave like real media sources from a user perspective.

US2011/289067 A1 discloses an electronic media client according to the preamble of claim 1.

The invention is an electronic media client comprising, as a component, an electronic media content guide according to claim 1. The guide comprises a data interface configured for receiving content information data from a plurality of media content sources, a graphical interface generator configured for generating a graphical user interface for displaying information about media content sources and media content items, a user input interface configured for receiving user inputs and a media storage and playback controller. The graphical interface generator is further configured to generate a representation of media content sources comprising at least one real media content source and at least one virtual media content source as well as a representation of a plurality of media content items of the at least one real media content source and a representation of a plurality of media content items of the at least one virtual media content source and a representation of information about media content items of the plurality of media content items of the at least one real media content source and the at least one virtual media content source.

The media content items of the represented real media content source derive from the respective real media content source and the media content items of the represented virtual media content source derive from a plurality of real media content sources and pertain to media content items related to at least one theme. The media content sources comprise broadcasted, multicasted, internet streamed and / or unicasted media content items.

The graphical interface generator is configured to generate a representation of a plurality of media content items of at least one real media content source and a representation of a plurality of media content items of the at least one virtual media content source. The graphical interface generator is further configured to generate a representation of information about media content items of the plurality of media content items of the at least one real media content source and the at least one virtual media content source. The media content items of the represented real media content source are provided by the respective real media content source and the media content items of the represented virtual media content source derive from a plurality of real media content sources and pertain to media content items related to at least one theme. The virtual content sources and real content sources are displayable in a unified list by the graphical interface. However, virtual content sources and real content sources can be indicated differently by the graphical interface to enable the user distinguishing virtual content sources from real content sources.

Linear media channels, such as traditional TV channels, are real media channels. Virtual media channels generally comprise media content items from different media sources as for instance server or recorder. Server and recorder are real media content sources that can be non-linear media content sources and that can provide media content items. However, since a virtual media channel that is played back by the aid of an electronic media client can inter alia behave similar to a traditional linear media channel as provided by a single real linear media source, virtual media channels are suggesting to the user that has selected a virtual channel a single media source that in fact is "created" by an electronic media client that enables playback (reproduction) of the sequence of media content items that are part of a virtual media channel. Because a virtual media channel thus suggests the existence of a (virtual) media source, the term "virtual media channel" and "virtual media source" are used synonymously in the present disclosure.

The media content sources can be configured for broadcasting, multicasting, internet streaming and/or unicasting, e.g. video on demand, media content items. Preferably at least one virtual media content source comprises at least one first real media content source for broadcasting, multicasting, internet streaming or unicasting media content items and at least one second real media content source for transmitting media content items according to a method different to the method of the first real media content source.

Preferably, the graphical interface generator is further configured to respond to an individual user input that determines at least one theme and to generate a theme-oriented representation of media content item information and a respective theme-oriented virtual media source according to the individual user input. In other words, the user can select a preferred theme via the user interface and the graphic interface generator will generate a representation e.g. a list of media content items corresponding to the theme respectively, and further display for each represented theme-oriented media content item the real media content source the media content derives from. Thus, a theme channel - a virtual media source - Is created. A theme channel is defined by content items that have at least one feature in common and/or that do not have at least one specified feature. Such features are e.g. genre, activity, actor, director, location or the like. Therefore, a theme channel can be specified to comprise only content items, which comprise or do not comprise a certain feature combination.

In a preferred embodiment of the invention the graphical interface generator is operatively connected to a recommender engine that is configured to determine which media content item is related to a particular theme. Alternatively the matching of theme and media content item can be performed editorial.

Preferably, the graphical interface generator is configured for displaying preset user commands for being selected by an individual user. In addition or alternatively the user can display user commands that have been transmitted to the electronic media content guide via the user interface.

It is preferred that the graphical interface is configured to display a cursor, frame and/or cross-hair, wherein the user interface is configured to navigate the cursor, frame and/or cross-hair for selecting a displayed preset user command or placeholder referring to a preset user command. The user interface is preferably configured to navigate the cursor, frame and/or cross-hair by being pointed at a respective position of display device.

In a preferred embodiment of the invention a recording session for recording an electronic media content item during transmission is automatically scheduled and initiated. Advantageously, the user can overrule scheduled recording procedures by deactivating the automatic recording and/or programming an alternative recording timer. Further preferred, the graphical interface generator is configured to display a notification message when scheduled recording sessions would take place at least partly simultaneously.

Preferably, the representations of media content sources, media content items and information about media content items are updated automatically.

Advantageously, a recommender engine is configured to generate a list of media content items of at least one real media source for the individual user to generate a new virtual media content source or to be added to an already existing virtual media content source. Preferably, the media content items from the list of media content items are used for generating the new virtual media content source or for being added to the existing virtual media content source by the recommender engine automatically.

According to the invention it is preferred to provide a user interface so that the individual user can rate media content items through the user interface, wherein the rating of the media content items is considered by the recommender engine.

Preferably, the graphical interface is configured to merge at least two virtual media content sources to a merged virtual media content source.

It is preferred that virtual media content sources generated for at least one individual user are providable to at least one other individual user.

Advantageously, the graphical interface is configured to provide a predefined user command for playing a selected media content item, wherein the electronic media content guide is configured to store a current play position when the individual user interrupts playing the selected media content item. Thus, a bookmark is created. A bookmark comprises the ID of the channel, e.g. theme channel ID or personal channel ID, Clip ID and playback position of the clip. Moreover it is preferred that the electronic media content client is configured so it can generate a timestamp for storing the relative playback time the bookmark was created. In case the theme channel that comprises the book-marked content item has been modified and does not comprise the specific content item anymore, the bookmark can be deleted automatically. Alternatively, the respective content item could be saved locally und deleted automatically when the bookmark is deleted by the user.

It is preferred that the media content items of a virtual media content source are sorted by a determined criteria, such as date of recording, name of media content item or actor, episode, genre or the like, in a line-up. It is further preferred that the media contend guide is configured in a way that when a user selects a virtual media content source for playback the digital media content items are played according to the line-up. The user does not need to select a particular media content item. However, it is within the scope of the present invention that the user also has the possibility to select a particular media content item of a virtual media content source for playback from the beginning or any arbitrary play position. Further preferred the electronic media content guide can comprise a function for random playback of the media content items of a virtual media content source.

In the following media content sources are also referred to as "channels". A channel can be either linear (i.e. the channel contains only DVB broadcasts [recorded, live or in the future]) or non-linear (i.e. the channel contains Internet streams).

According to the invention, a further channel type named personal channels (which constitute virtual media sources) shall be supported. The personal channel comprises content items that reflect the interests of a user. The content items for the personal channels can be selected according to a user profile or an explicit selection by the user. These content items may be directed to different themes. This is a distinguishing feature between a personal channel and a theme channel. In the following, if both, personal and theme channels are meant, the wording "hybrid channel" is used in the OSD.

The user profile can be based on an initial user profile, characterizing an average user e.g. based on statistics, manual input of information by the user, e.g. rating of content items, input of information in a startup wizard (explicit input) or monitoring of user's behavior, e.g. the content items the user selects and the time the user watches the content items (implicit input). The user profile can be updated implicitly e.g. based on the user's behavior Moreover, the user profile can be updated explicitly based on the user's feedback, e.g. user ratings on content items, channels or themes.

The list of theme channels and especially the content of each theme channel must be updated on regularly bases. The channels should be checked for updates every four hours, as some of these channels (esp. the news channels) are built from up-to-date contents. The device's service list can now contain not only common services, but also these theme channels. For each theme channel the current play position shall be stored, so when zapping again to the same channel, playback is started at the same position. For linear theme channels it shall be possible to configure, whether the broadcasts are automatically recorded or not. If the contents are not automatically broadcasted, the user can only watch this channel, if for the current time a broadcast is part of the channel. For channels, that are configured to be recorded, every already recorded broadcast can be watched, but by default playback will start automatically at the position where the channel was last left.

The invention will now be described, by way of example, based on embodiments with reference to the accompanying drawings, wherein:
Fig. 46 shows a schematic block diagram of a preferred embodiment of a system for providing media channel information data to electronic media clients according to the present invention;
Fig. 47 shows a schematic workflow diagram of the system of Fig. 46; and
Fig. 48 shows a schematic overview of the cooperation between the electronic media server, the electronic media client and external entities.

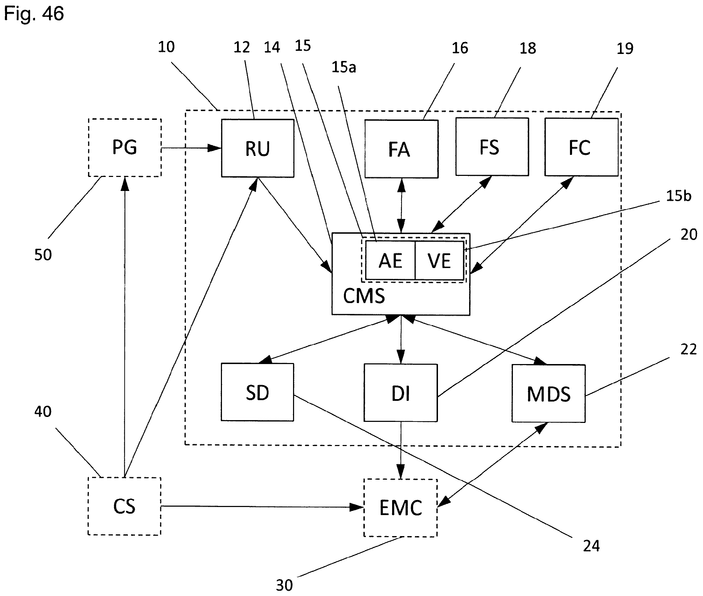

As can be inferred from Fig. 46, which shows a preferred embodiment of a system according to the invention, the system comprises an electronic media server 10 with a receiving unit 12 that is connected to a content management system 14. The electronic media server 10 is indicated with a dashed line.

The content management system 14 comprises a channel editor 15 for enabling an editor to create, graphically design, name, modify and/or delete virtual channels. Preferably, the channel editor 15 is configured for managing real media channels as well. Thus, real media channels can be added to and deleted from the content management system 14 by the channel editor 15. Within the channel editor 15, a media editor comprising a video editor 15a and an audio editor 15b is provided. The media editor enables the editor to create, delete and modify single media items, e.g. video or audio files, and/or add references to an externally hosted media file and assign metadata to it. Moreover, the operator can create a graphical design for a real media channel. By editing a real media channel with the channel editor 15 and thereby modify the name or the playlist of the real media channel, a virtual media channel is created.

The receiving unit 12 of the electronic media server 10 is configured for receiving metadata of media content items from a media content source 40 and/or a program guide 50, like an electronic program guide (EPG). The receiving unit 12 is further configured for providing the acquired metadata to the content management system 14. Beyond that and preferably, the receiving unit 12 is further configured for receiving media content items from the media content source 40 and to provide the received media content items to the content management system 14.

The electronic media server 10 comprises a file analyzer 16, which is connected to the content management system 14 for analyzing the file parameter, e.g. file format, video codec, audio codec, streaming transfer protocol, image dimensions, resolution, duration, file size, audio sampling rate, image frame rate, bitrate, etc., of media content items by reading the respective metadata. In this preferred embodiment, a file selector 18 is provided for selecting media content items having file parameters that a specific client is able to process. Preferably, the file selector 18 is in direct communication with the file analyzer 16. Alternatively or additionally to the file selector 18, a file converter 19could be provided for converting media content items that have second file parameter that are not reproducible at a determined electronic media client into the first file parameter that is reproducible at the respective electronic media client.

Furthermore, the electronic media server 10 comprises a storage device 24 for storing metadata of media content items. The storage device 24 may be further configured for storing media content items received from the receiving unit 12 and/or storing media content items that have been converted by the file converter 19. Therefore, the file converter 19 could be in direct communication with the storage device 24 as well for acquiring data, like a media content item, from the storage device 24 and writing data, such as a converted media content item, to the storage device 24.

The electronic media server 10 further comprises a metadata delivery system 22 for providing media channel information data to an electronic media client 30. The media channel information data comprises information data of at least one real media channel as well as information about media content items of at least one virtual media channel. The program of a real media channel is usually generated by a content provider of the media content source 40 and provided by the media content source 40 or the program guide 50. Basically, the program of the virtual media channel is provided by an editor and/or editorial department that usually is economically conjoined or the same entity as the provider or the operator of the electronic media server 10 respectively. However, a virtual channel can be created and/or managed by any external entity and/or even the user of an electronic media client 30. The information about media content items comprises at least information about the media content item itself, like the name, title and/or denomination of the media content item, and about the media content source 40 the media content item originates from. Hence, the metadata delivery system 22 enables the electronic media client 30 acquiring a specific media content item from the respective linear media content source 40 or non-linear media content source 40 without the necessity of providing the media content item itself by the electronic media server 10.

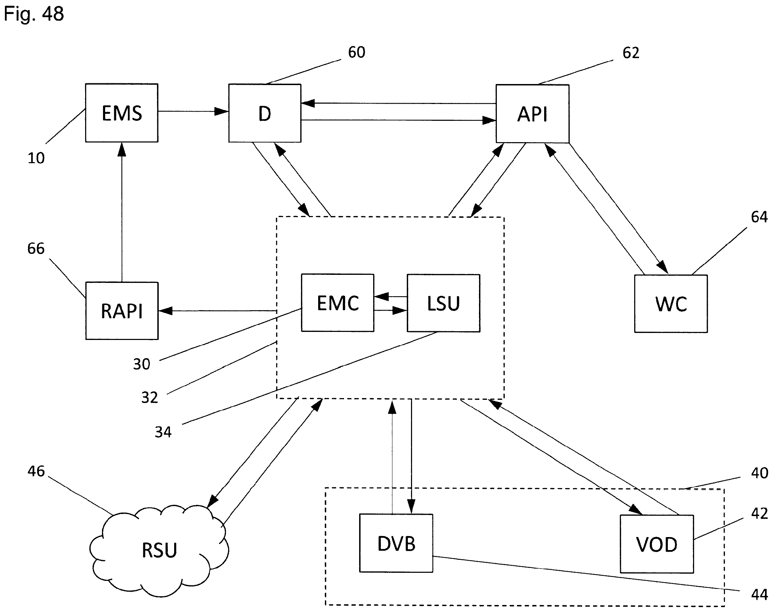

Thus, media content items of a linear media content source 40, namely broadcasted media content items, are automatically recordable by the electronic media client 30 for time-shifted playback, e.g. according to the playback schedule of a virtual media channel or the playback preferences of the user of the electronic media client 30. In particular, the electronic media client 30 is configured to process media channel information data of a virtual media channel and to thus determine linear media content items included in the virtual media channel. The electronic media client 30 is preferably further configured to trigger recording of linear media content items included in a virtual media channel and storing recorded linear media items on a local storage unit 24 or a remote storage unit 46. In addition to recording and storing linear media content items media content items of non-linear media content sources 40 can optionally be downloaded and stored. However, media content items of non-linear media content sources 40 usually do not have to be automatically downloaded by the electronic media client 30 because such media content items are usually permanently - or at least for at least the same time period as the media content items are offered in the virtual media channel - available from the media content source 40 for being accessed. In case a non-linear media content source 40 provides a media content item for a short period only - e.g. a shorter time period than the media content items are offered in the virtual media channel - the electronic media client 30 is configured for automatically downloading the respective media content item onto its local storage unit 34 (see Fig. 48) or a remote storage unit 46. In general, the storage unit can be local or remote. For storing media channel information data of real and virtual media channels the local storage unit 34 that is directly connected to or part of a settop box or a smart TV comprising the electronic media client 30 is preferred. Media content items may as well be stored in a remote storage unit 46 that can be accessed by the electronic media client 30 via e.g. the internet. Alternatively or additionally, the content management system 14 is configured for identifying such media content items and store them onto the storage device 24 if indicated. In general, it is preferred that the electronic media client 30 is configured for automatically recording or downloading media content items that will not be available at the media content source 40 within a predetermined time limit, e.g. the time period, the particular media content items are contained in a virtual channel offered by the electronic media server 10.

In addition, the electronic media server 10 comprises a data interface 20 that is configured for providing media content items to the electronic media client 30. The data interface 20 may be further configured for receiving data from the electronic media client 30, like information about the specific type of the electronic media client 30, subscriptions and/or file parameter the respective electronic media client 30 is able to reproduce and for providing the acquired information to the content management system 14. In an alternative embodiment, the data interface 20 and the metadata delivery system 22 may be the same or integrated in the same component.

The above described electronic media server 10 is just a preferred embodiment of the invention. A file converter 19 is preferred but rather an optional component and, therefore, it is not absolutely necessary for carrying out the present invention. In an alternative, not shown embodiment of the invention, the receiving unit 12, data interface 20 and metadata delivery system 22 could be integrated in the same component of the electronic media system 10.

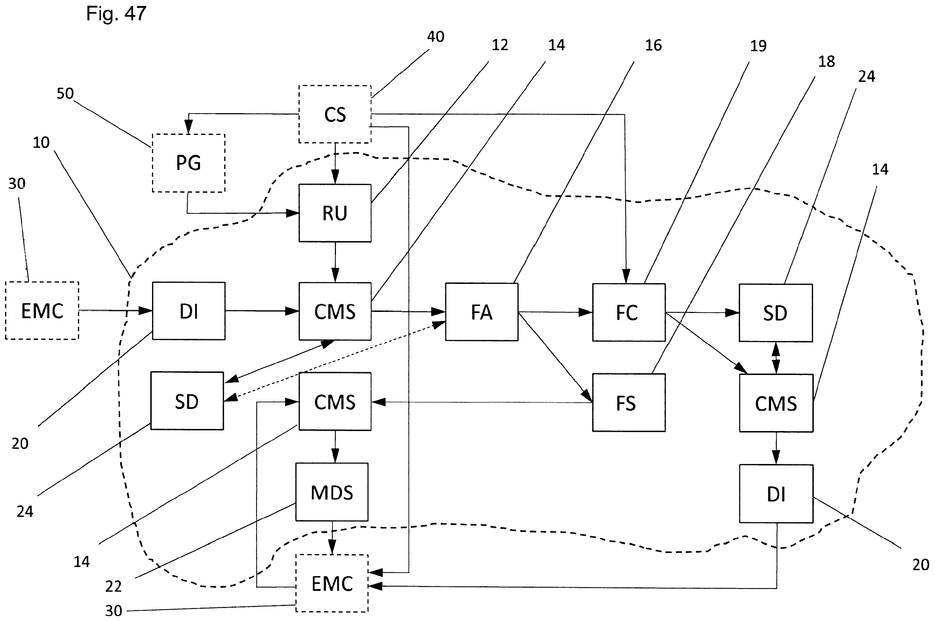

Fig. 47 shows a schematic workflow diagram of the above described system comprising an electronic media server 10 according to the invention. All processes that are performed within the electronic media server 10 are encompassed by a dashed line.

For clarity reasons, in the following description, the workflow is shown in a determined order starting from an initial step. However, according to the invention, some processes are running independently from each other and the sequence of these processes could be different than described. E.g., a process of acquiring information from the electronic media client 30 could be running before, during and/or after metadata is received by the receiving unit 12.

In a preferably initial step, metadata of media content items that is provided by the media content source 40 is received by the receiving unit 12 of the electronic media server 10. The metadata Is acquired directly from the media content source 40 and/or from the program guide 50 and/or is entered manually into the media editor part, e.g. the video editor 15a or the audio editor 15b of the content management system 14.

In a subsequent step, the receiving unit 12 transmits the received metadata to the content management system 14. Preferably, the content management system 14 directly stores the received metadata to the storage device 24. Then, the content management system 14 provides selected or random metadata received from the receiving unit 12 to the file analyzer 16. The file analyzer 16 analyzes the file parameter of the media content item and forwards the result of the analysis to the file selector 18. The file selector 18 selects media content items that have file parameter that are reproducible at a specific electronic media client 30 for being presented to that specific electronic media client 30 within a virtual channel. Thus, each electronic media client 30 is provided with virtual channels comprising links to media sources of media content items that are reproducible on that respective electronic media client 30.

In a configuration, in which the metadata is stored in the storage device 24, the file analyzer 16 may receive the metadata directly from the storage device 24 without involving the content management system 14. After the file analyzer 16 has analyzed the metadata of a media content item, the result of the analysis is transmitted to the content management system 14 and/or forwarded to the file converter 19.

The content management system 14 forwards the metadata in the form of a real channel or a virtual channel via the metadata delivery system 22 to the electronic media client 30. Successively, the electronic media client 30 acquires a selected media content item from the media content source 40 for being instantly watched or buffered in the local storage unit 34 of the electronic media client 30 for being consumed, e.g. watched or listened to, at a later time. Moreover, by these means, a media content item does not have to be consumed in one piece. Playback can be interrupted, passages skipped, fast forwarded, rewinded and/or repeated.

In a further step, the electronic media client 30 is providing information about the kind or type of the electronic media client 30 via the data interface 20 to the content management system 14. Alternatively or additionally, the electronic media client 30 is configured for providing information about a media channel subscription of a user to the content management system 14. Preferably, the content management system 14 is configured for comparing this information with the media channels available for being presented to the electronic media clients 30 and to determine if a particular electronic media client 30 is authorized for receiving a specific media channel and/or able to process a specific media content item. In case the file format or codec of an analyzed media content item is not suitable for playback at a specific electronic media client 30, the respective media content item will be downloaded or streamed from the media content source 40 by the electronic media server 10, e.g. by the file converter 19 directly. During this process or successively, the file converter 19 converts the respective media content item into a format that is suitable for playback at the specific electronic media client 30. Preferably, in a successive step, the converted media content item is stored at the storage device 24 and/or provided to the content management system 14. For the case that the converted media content item is stored with the storage device 24, the content management system 14 is configured for receiving the media content item from the storage device 24 and providing it via the data interface 20 to the electronic media client 30. Alternatively, the content management system is configured for providing converted media content items to the electronic media client 30 directly via the data interface 20 without storing it within the electronic media server 10. In that case, it is preferred that the converted media content is stored in the local storage unit 34 of the electronic media client 30.

The electronic media client 30 according to the invention s configured for sending specific information about the type or specific characteristics of the electronic media client 30 to the content management system 14. The content management system 14 evaluates this information and provides only metadata and/or media content items to the electronic media client 30 that are determined to be received by the respective electronic media client 30 e.g. due to playback capabilities of the electronic media client 30, subscriptions of the users of the electronic media client 30 and/or requirements concerning the provider of the electronic media client 30. Alternatively or additionally, but this not part of the invention, the electronic media server 10 is configured for being provided with this information about the playback capabilities of specific electronic media clients 30 manually e.g. by the operator of the electronic media server 10.

Alternatively, the content management system 14 is configured for providing metadata of media content items to the electronic media clients 30 without considering subscriptions of particular media channels of the electronic media clients 30. In this alternative embodiment, the electronic media clients 30 distinguish between media channels that are subscribed to and that are not subscribed to and present to the user only subscribed media channels.

For the case that an electronic media client 30 is not able to playback a specific media content item, the electronic media client 30 is configured to send a request for converting that particular media content item to the electronic media server 10. Therefore, information about the type of electronic media client 30 would not be necessary for such embodiment.

Fig. 48 shows an example overview of the communication between the electronic media client 30, the electronic media server 10 and external entities. The electronic media client 30 comprises a set top box 32 e.g. for receiving electronic media content items and for forwarding the electronic media content items to a not shown display unit. The set top box has a not shown user interface for receiving user commands, such as media channel selections and explicit user ratings. The electronic media server 10 is configured for sending data 60 to the electronic media client 30. This data 60 comprises metadata of media content items as well as media channel information that is preferably sent to the electronic media client 30 by means of a push-service. In general, the electronic media server 10 is configured for sending data 60 by means of a pull-service as well. The latter is preferred for data 60 that comprises media content items, such as converted media content items that have been converted by the file converter 19 of the electronic media server, as can be seen best in Fig. 47. In this case, the electronic media client 30 is configured for sending a respective request to the electronic media server 10.

An important aspect of data 60 is media channel information data, such as media content item information data. The media content item information data comprises at least information that allows the electronic media client 30 to identify a particular media content item. Preferably, the electronic media client 30 is configured for automatically accessing additional information about that specific media content item from a web client 64 via an application programming interface (API) 62, based on the identification of a particular media content item,. Preferably, this additional information comprises information about the content of the media content item - e.g. an abstract about the plot of a movie - about persons involved in creating the media content item - e.g. actors, directors or producer of the media content item - and/or supplemental information - e.g. genre, locations, ratings, rankings, etc.. In a preferred embodiment of the invention, alternatively or in addition, the electronic media server 10 is configured for providing this additional information to the electronic media client 30 .

Preferably, the media content item information comprises information about the availability of a particular media content item, e.g. the media source 40 of a non-linear media content item. For linear media content items, besides the identification of the media source 40, the time of broadcast has to be provided to the electronic media client 30 in order to enable the electronic media client 30 to acquire a particular media content item. Preferably, this information is provided by the electronic media server 10. However, since the electronic media server 10 provides at least enough information to the electronic media client 30 to identify a particular media content item, the electronic media client 30 can acquire further information about the availability of the particular media content item from the web client 64 via the API 62.

Once the electronic media client 30 has acquired media content item information data, the electronic media client 30 can automatically receive the particular media content item from a media content source 40, like a video on demand source 42 or digital video broadcasting source 44. Preferably, the electronic media client 30 is configured that the process of receiving media content items is running in the background while the user is consuming another media content item or when the electronic media client 30 is in standby mode.

In general, media content items that are provided by a video on demand source 42 are available for download for a longer time period, namely as long as the media content item is offered at that particular source. The length of this time period can vary, depending on the provider of the respective non-linear media content source 40. During this period, at least the download process for a particular media content item has to be initiated and finished. Hence, a specific time for downloading such particular media content item does not have to be determined and just has to be within the above-described time period. However, a media content item that originates from a digital video broadcasting source 44 can only be received during the time period of broadcast. In other words, the beginning and end time of a recording session of broadcasted media content items is predetermined. Since the time of broadcast of a broadcasted media content item may differ from the time that particular media content item is consumed by the user, the electronic media client 30 is configured for saving broadcasted media content items to the local storage unit 34 for later playback availability. Preferably, the electronic media client 30 is configured for automatically starting and ending the download or saving process of a media content item.

In other words, the electronic media client 30 is configured for retrieving electronic media content items from the media content server 10 directly or from media content sources 40, like video on demand sources 42 and digital video broadcasting sources 44. In particular non-linear media content items can be acquired in the moment they are scheduled in a virtual media channel without the necessity of being saved to the local storage unit 34. The electronic media client 30 is configured for saving media content items onto the local storage unit 34 or a remote storage unit 46 for later playback, if necessary. On the other hand, media content items that originate from linear media content sources usually have to be saved to an local storage unit 34 or a remote storage unit 46 because the user of the electronic media client 30 my want to consume a particular media content item at a different time than the time it is broadcasted.

As an alternative or a supplementary to the local storage unit 34, a remote storage unit 46 - symbolized by a cloud - is provided. A remote storage unit 46 is e.g. a storage server that is configured for being remotely accessed by the media client 30. The remote storage unit 46 is configured for basically storing the same data as the local storage unit 34 is configured to store. The remote storage unit 46 is usually provided outside the set top box 32 and could be located at the electronic media server 10 site or at the site of a third party provider. The remote storage unit 46 is configured for storing media content items but could also be configured for converting media content items into a specific format, e.g. a format that is suitably for playback at a specific electronic media client 30. By these means, it is possible to use less storage space of the local storage unit 34. Optionally, the remote storage unit 46 can comprise a file converter for executing converting processes as described with respect to the electronic media server 10. Another advantage of the involvement of a remote storage unit 46 is the accessibility of the data stored on the remote storage unit 46. Basically, the remote storage unit 46 is configured for being accessed from an arbitrary location that has e.g. access to the internet. Thus, data saved by a first set top box 32 that is located at a first location could be accessed by a second set top box 32 that is located at a second location. Besides information about media channels and media content items as well as media content items themselves, user information such as a user profile or a configuration of the set top box 32 could be stored in the remote storage unit 46 as well. Consequently, a specific user can utilize a plurality of set top boxes 32 without the necessity of configuring each set top box 32 individually. Preferably, the usage of the remote storage unit 46 is password protected in order to avoid unauthorized access. Preferably, a user identification is implemented for providing individualized data for each user that is registered to the remote storage unit 46.

As an additional feature, a report application program interface (API) 66 is provided that is configured to enable the exchange of information from the set top box 32 to the electronic media server 10. Preferably, this information comprises user statistics, e.g. behavior, user ratings, preferred system configurations of the user, error reports, etc.. Hence, the electronic media server 10 can be provided with information acquired by the media client 30. This information can be sent ad hoc - e.g. in case a respective event to be reported occurs - or at a scheduled time - e.g. once a day or a week. In this case, the information can be stored to the local storage unit 34 and/or the remote storage unit 46.

A specific feature of a preferred electronic media client is that the electronic media client is configured to display identifications (e.g. a respective title or name of a channel) of real media channels together with virtual media channels in a common representation. If the common representation corresponds to the table provided by traditional electronic program guides (EPG) such representation would for example comprise at least one row or column for each available channel including real and virtual media channels.

### Functional Specification

### Theme channel types

The electronic media guide handles theme channels of two types: linear and non-linear. Linear theme channels are lists of DVB events (past, current and/or future events) and non-linear theme channels contain video content from the internet.

The video content of non-linear theme channels can be streamed using the following internet protocols: http, rtp, rtsp. At the moment, only http is supported.

### Configuration parameters

### hybrid channel configuration

The whole functionality can be enabled or disabled, default is enabled after factory reset. Devices which get this functionality with a service update default to disabled after the update.

The hybrid channel functionality needs a data update via internet on a regular base. The update interval can be configured and is set to 4 hours per default. The URL of the update server can be changed.

The line-up of the theme channels may change over the time. It can be configured to apply these changes automatically or manually after user confirmation (default).

### Theme channel configuration

For non-linear theme channels no configuration is applicable.

For linear theme channels a global configuration is available, which applies to all new added theme channels. For each channel it is possible to overwrite this configuration with individually adapted settings.

Linear theme channels can be configured to be subscribed and the maximum number of recordings for this channel can be set.

The events of a subscribed theme channel will be automatically recorded, subscription is enabled per default. Subscription of a theme channel is only valid, when the theme channel is listed at least in one favorite list. Only a certain number of recordings will be kept of a subscribed channel, this number can be changed and is set to 5 per default.

### Data update

An update of the theme channel data can update the contents of all theme channels and also the theme channel line-up. Updates of the theme channel contents are automatically applied, changes to the line-up are notified to the user after a stand-by cycle.

Updates are performed:
- Nightly during the system timer
- About 10 minutes after start-up
- During operation of the device in the configured interval (default update interval: "auto" -> next update is performed automatically, if data of a hybrid channel is expired (each hybrid channel data information has an expiration timestamp) Manually

Updates can be interrupted.

### Timer and Conflict handling

The planned hybrid channel recordings are not visible in Timer overview. Timer overview only show timer that were explicitly caused by user. Events of subscribed theme channels can conflict with traditional timers set by the user. Timers set by the user always have preference; the conflicting event is not accessible in theme channel. Even if parts of the conflicting could be recorded, the entire event is not accessible and the recorded parts are removed. If a conflict occurs between two theme channel events, the first starting event is recorded and the other one is not accessible. Live presentation has also priority to theme channel recordings, that means user is not interrupted in his live view. Event is also not accessible in theme channel.

### Pre-roll- and Post-roll time:

If an event is recorded on a linear theme channel, recording is started 5 minutes before start time, given by a scheduled event data and stopped 5 minutes after end time given by the scheduled event data.

### Dealing with recordings

Subscribed linear theme channels have a maximum number of recorded events. When this number is reached, the oldest recordings are deleted automatically. The deletion takes place when the recording of a new event is stored. The user can archive events of subscribed linear theme channels. Archived events are additionally referenced in the list of DVR recordings. They are stored inside a virtual folder named "hybrid - " followed by the name of the theme channel, if the virtual folder feature is enabled.

Examples for use cases are: a) If the event is already recorded, it is archived when the user selects this function; b) If it is a past event which could not be recorded or is already deleted, archive is not possible; and c) If a future event is archived, the recording is additionally marked as manual set. The archived recording is available as soon as the recording starts.

The recording is physically deleted, when both the archived recording and the subscribed event are deleted. Archiving does not prevent the removing of the event from the event list in the theme channel. Only archived events can be edited and exported.

### Recovery

If for any reason the device is forced to recover the DVR recordings (e.g. after a factory reset), the recorded theme channel events will be recovered only as archived events flat in 'My TV recordings'. User gets an information about this fact, when initiating factory reset from menu. The current message is extended, resulting in following query:
"Restore factory settings? (After factory reset all existing hybrid channel recordings can be found in 'My TV recordings'.) [Yes/No]"

User Interface (Ul) Specification

Main goal of UI changes is to make hybrid channels look and feel similar in every module where it is used, that means e.g. using the same icons in every case.

### Installation assistant

### Intention

For the new theme channel feature it is necessary to extend the installation assistant with a new page.

### Introduction page for hybrid channel feature

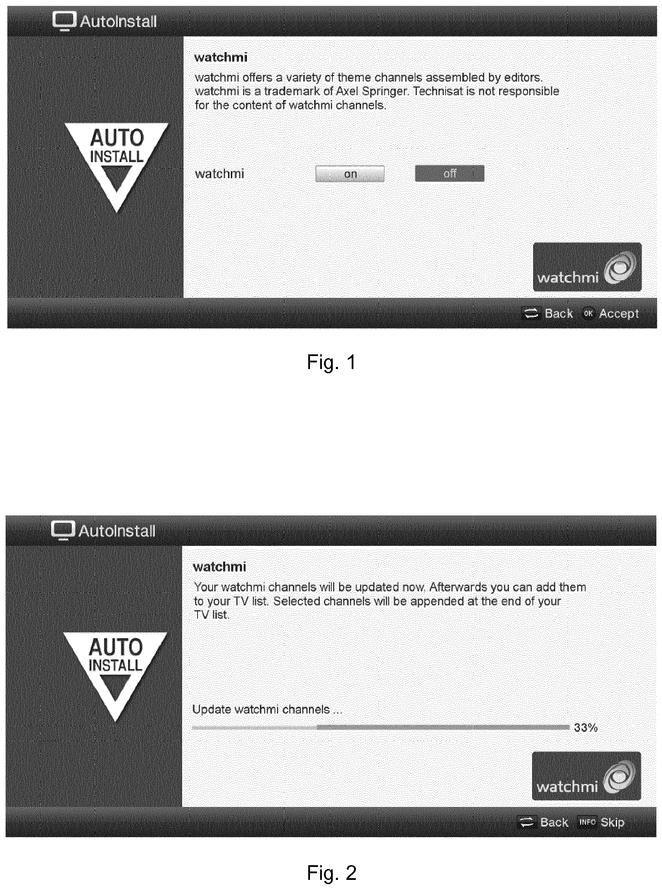

### Views: See fig. 1

### Behaviour

New auto install page is situated at very last setting leaf during installation process. (directly before Installation complete state). If user aborts installation assistant before (at the very beginning), feature is turned off because he has to accept the terms and conditions. Hybrid channel feature can be turned on/off (default is "on"). 'Back' button goes to previous step 'Accept' button goes to next step In case user turned hybrid channel on: Next state "terms and conditions" follows. In case user turned hybrid channel off: All following hybrid channel pages are skipped. Feature is turned off.

### Hybrid channel update

### Views

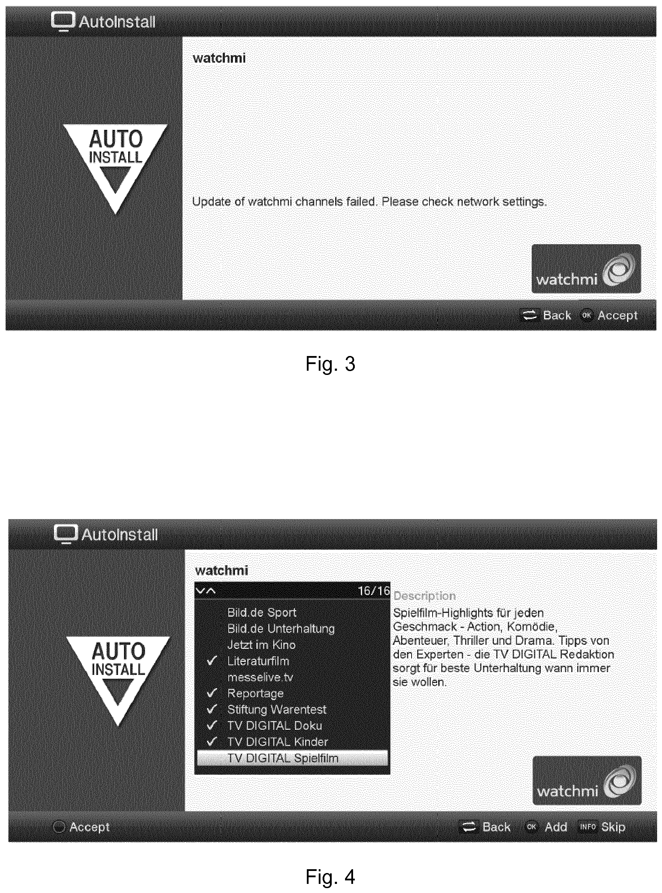

Running update: See fig. 2
Update failed: See fig. 3

### Behaviour:

Hybrid channel update starts automatically and progress is displayed. User can skip update with 'Info' button. In this case, following state 'hybrid channel selection' is also skipped. With 'Back' button, user can go back to state 'Introduction page for hybrid channel feature'. If update is successful: switch to next state "hybrid channel selection" automatically. If update is not successful: Message occurs "update of hybrid channel failed. Please check network settings." User can proceed with 'Ok' button. In this case, following state 'hybrid channel selection' is skipped.

### Hybrid channel selection

### Views: See fig. 4

### Behaviour:

By default, all hybrid channels are un-selected (selected channels are made visible with hook-symbol).User can navigate through the list (with the inactive focus) using 'Up'/'Down' buttons. Description of currently focused entry is shown on the right side. With 'Ok' button (Add/Remove) user can select/deselect channels. 'Back' goes to previous step. 'Green' (Accept) button appends all selected channels at the end of the TV list. Installation assistant goes forward to next state. 'Info' (Skip) button appends all channels at the end of the TV list. (The default setting when entering the state.) Installation assistant goes forward to next state.

### Hybrid channel configuration

### Intention

To configure the new theme channel feature it is necessary to insert a new menu leaf. This shall be called "hybrid channel" and shall be situated at menu ->settings -> special functions.

### States

### Hybrid channel menu dialog

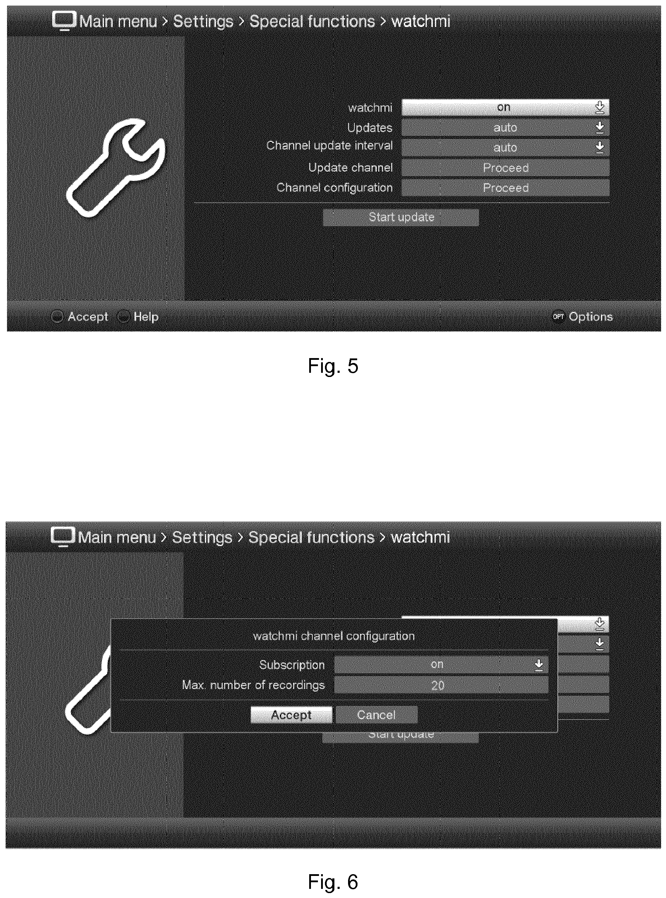

Intention: Contains all general settings to the hybrid channel feature
Views: See fig. 5

### Data management

Persistent data: All data which can be configured are read from and stored back to database

### Behaviour:

Following available configurations to the global feature can be done by this dialog:
- Hybrid channel (to switch feature on or off):
   - On, Off (default value if not overwritten during installation assistant);

- If feature is switched on, user has to accept the terms & conditions of hybrid channel feature again.

Updates (to get hybrid channel updates):
- Auto (default), Manual;

Channel update intervals can be e.g. Auto (default), 2 hours, 4 hours or 24 hours.

Update channel (to configure a channel where hybrid channel data can be updated). There may be provided different IP sources, from which the updates can be proceeded.

Channel configuration (to call the hybrid channel configuration dialog)

Start update (to start an update manually).

If hybrid channel is "off", all other options are deactivated (grey).

Option menu contains following entries:
Accept
Hybrid channel licence information -> Opens the terms & conditions so user can read them again
Start update
Help

If there are already hybrid channels with existing recordings but hybrid channel feature will be switched off.

User will be asked if existing recordings shall be deleted or saved (recordings of one channel will be saved to a respective virtual folder)

All hybrid channels will be deleted from TV/radio lists and complete list

### Entering

### Menu -> Settings -> Special functions -> hybrid channel

### Leaving

Button back calls a message box if user wants to leave the dialog with or without saving data

Green button or Option -> Accept to leave dialog and store values

### Hybrid channel configuration menu dialog

### Intention

### Contains all settings which affect hybrid channel

Can be used for global device settings and for special settings of one hybrid channel

### Views: See fig. 6

### Data management

Persistent data: All data which can be configured are read from and stored back to database

### Behaviour:

Following settings can be done:
Subscription on (default value) or off.
Max. number of recordings (from 1 to 50 limited, default value: 5)
Please remark, that subscription is only done, if channel is in a TV/radio list!

### Entering

### Menu -> Settings -> Special functions -> hybrid channel -> hybrid channel [Proceed]

### Leaving

Back button or "Cancel" to leave dialog without saving "Accept" to leave dialog and store values to database

### Hybrid channel update channel dialog

### Intention

To configure an update channel for hybrid channel feature

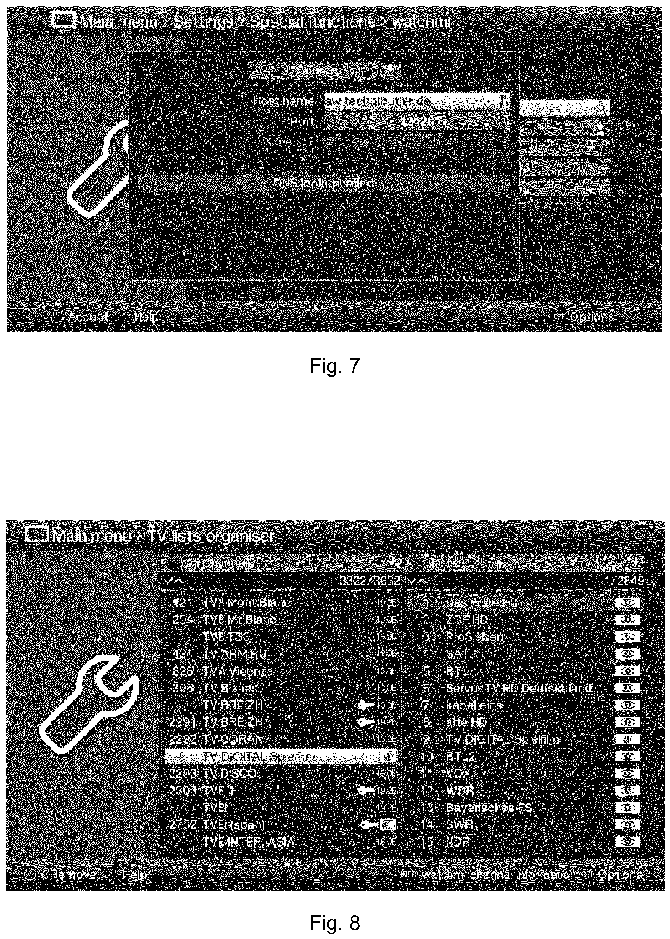

### Views: See fig. 7

### Data management

Persistent data: All data which can be configured are read from and stored back to database

### Behaviour:

For update channel configuration following items can be set:
- Host name, Port, and Server IP.

### Entering

### Menu -> Settings -> Special functions -> hybrid channel ->hybrid channel [Proceed]

### Leaving

### Back button to leave appended dialog

If changes would be saved or not will be decided by hybrid channel menu dialog

### TV/radio list organizer

### Intention

The TV/radio list organiser (Spec-SW-APP-UI-OSD2010-TV_radio_list_organiser) is extended in a way that it is possible to organise hybrid channels in the TV lists and to configure each hybrid channel.

### Main State

### Views:

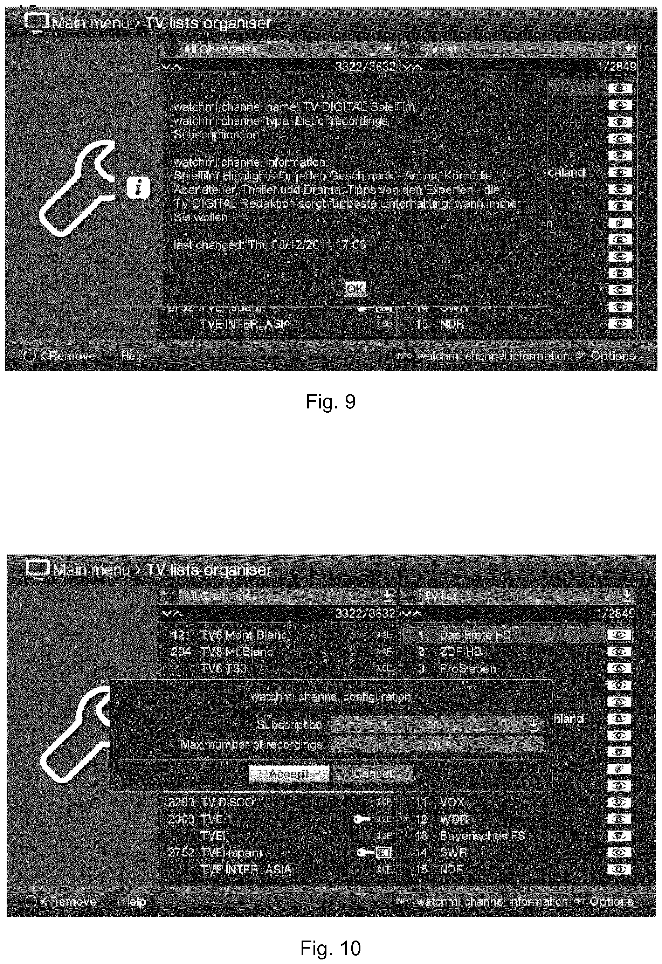

Main view: See fig. 8
Hybrid channel information view: See fig. 9
Hybrid channel configuration view: See fig. 10

### Behaviour:

Hybrid channels are part of the TV/radio complete list and can be added to TV/radio lists (favourite lists). Hybrid channels are marked with corresponding symbol in both left and right list. An additional left list is available "All hybrid channels" showing hybrid channels only. (It is located after list "All HDTV") Genre filters are extended by hybrid channel genres. (see chapter "Filter selection".) Following new options are available if currently active highlighted service (on left or right list) is a hybrid channel:
Further footer shortcut button "hybrid channel information" is available on 'Info' button. It opens the theme channel information state
Option menu offers a submenu "hybrid channel" (located directly above entry "Help") with following entries:
   "hybrid channel configuration" open hybrid channel configuration (see chapter "Hybrid channel configuration" above) to change the channel configuration for the currently selected hybrid channel.
   "hybrid channel information" opens the theme channel information state.

If a hybrid channel is removed from (right) TV/radio list and it is not present on any other TV/radio list and recordings are existing for that channel, message occurs:
There are still recordings existing for "TV DIGITAL Spielfilm". Shall they be archived to "My TV Recordings" before removing hybrid channel? [Yes/No]

If a hybrid channel is removed from (left) TV/radio complete list and recordings are existing for that channel, message occurs

There are still recordings existing for "TV DIGITAL Spielfilm". Shall they be archived to "My TV Recordings" before removing hybrid channel? [Yes/No]

### EPG

### Intention

This part describes theme channel related changes and behaviour for electronic programme guide (Spec-SW-APP-UI-OSD2010-SFI)

### Views

### Overview

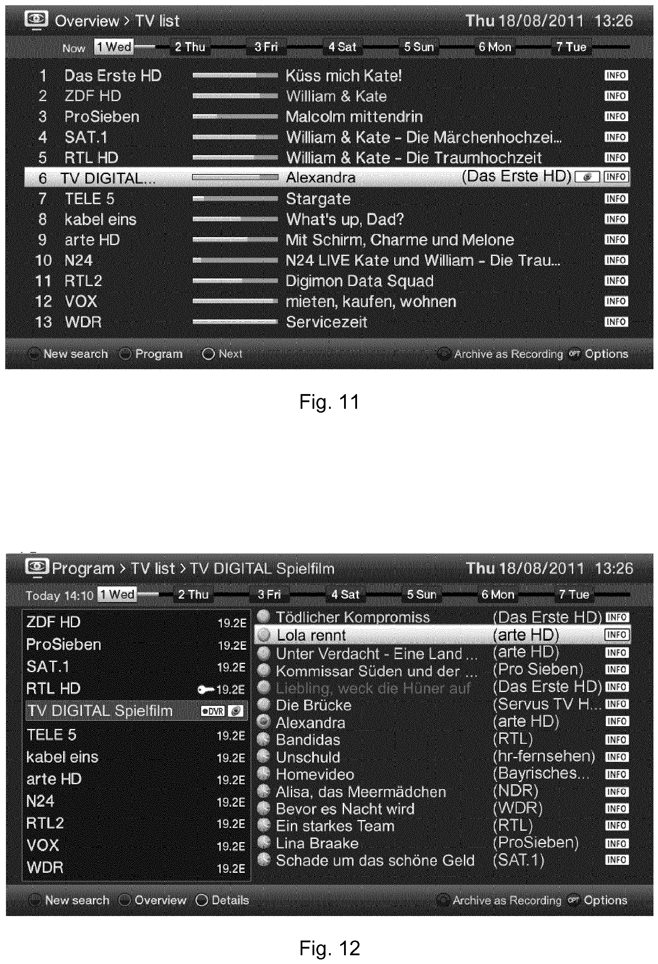

Overview with current running theme channel: See fig. 11

### Program views

View state selection of linear theme channel: See fig. 12

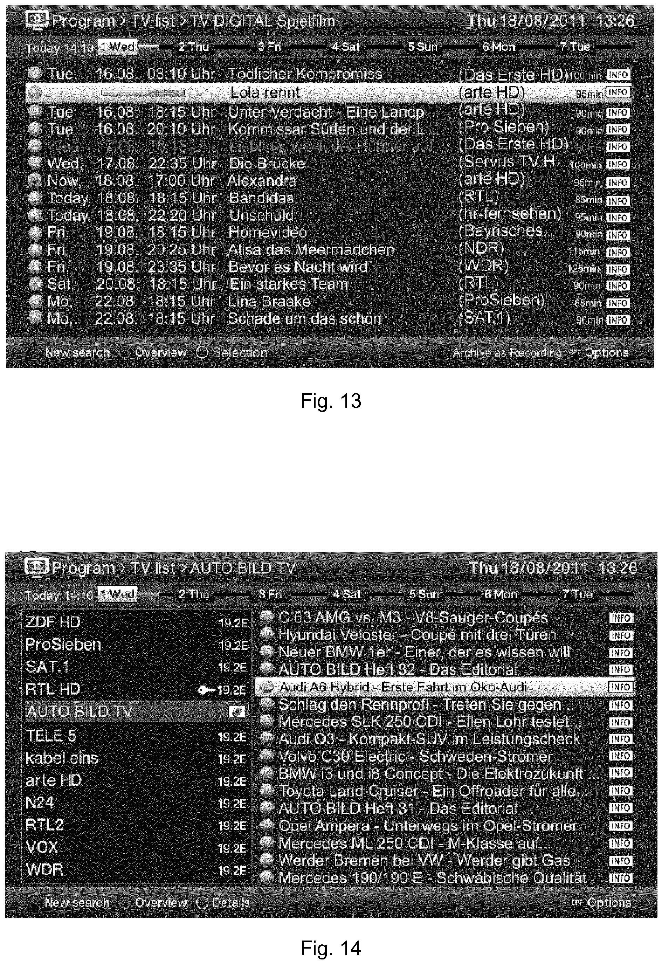

In fig. 14 an exemplary representation of media content sources and media content items generated by the electronic media content guide is shown. The representation basically comprises two large windows arranged side by side, wherein a left window includes a list of media content sources in an arbitrary order. Alternatively the media content sources can be sorted by name, channel number, frequency or any other kind of ranking. In the presented example the media content sources comprise real media content sources and a virtual media content source, wherein the virtual media content source is highlighted by a bar to show that it has been selected from the group of media content sources. In other examples not shown, the amount of virtual content sources could be two or more.

A right window comprises in a first column a list of media content items of a selected media content source and in a second column the name of the respective real media content source of each listed media content item. In the present example the virtual media source "TV DIGITAL Spielfilm" is selected. Therefore, the right window shows in the first column a list of media content items of the virtual media source "TV DIGITAL Spielfilm" and in the second column the respective real media content source, each corresponding to a listed media content item. Since "TV DIGITAL Spielfilm" is a virtual media content source, the second column comprises a plurality of real media content sources.

The exemplary representation of fig. 14 further comprises in a top right section the actual date and time. In a top section above the left window and the right window and below the top right section the date and time of the highlighted media content item is highlighted.

View state details of linear theme channel: See fig. 13

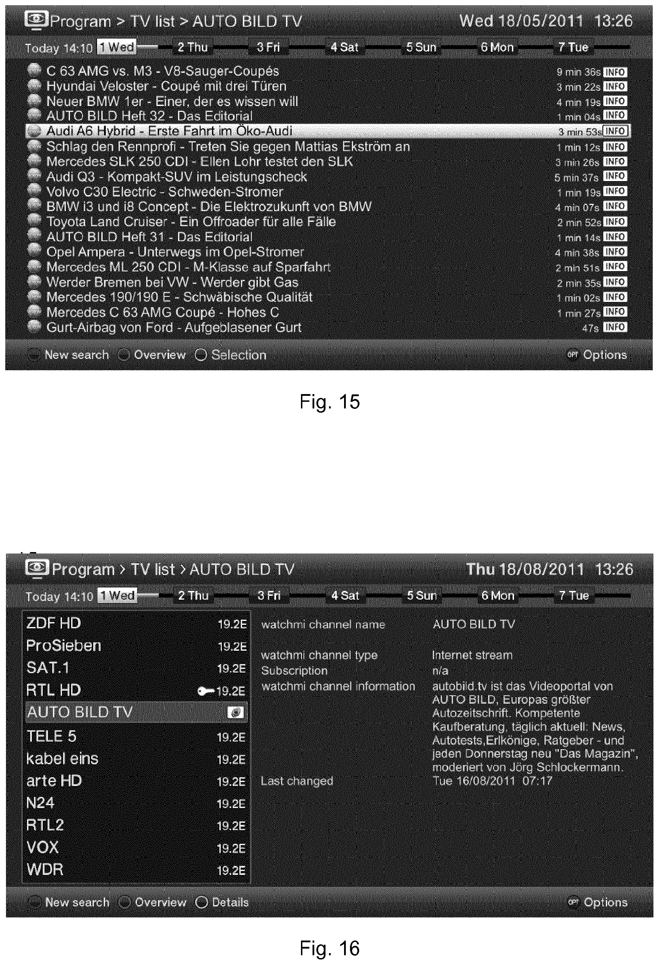

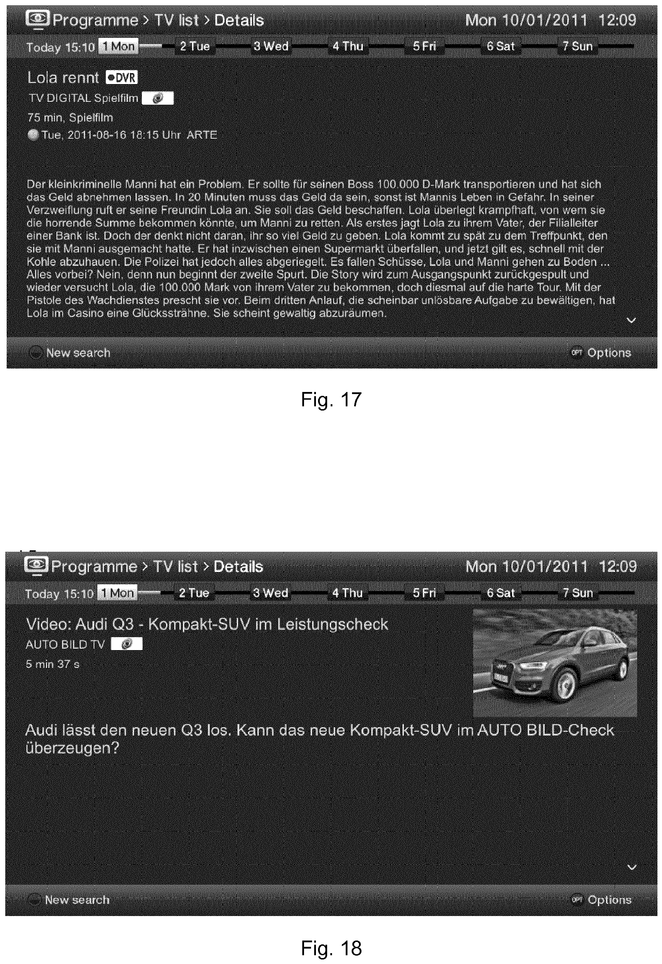

View state selection of nonlinear theme channel: See fig. 14
View state details of non-linear theme channel: See fig. 15
Theme channel Information/Details: See fig. 16
Details of linear theme channel event: See fig. 17
Details of nonlinear theme channel event: See fig. 18

### Behaviour:

Theme channel events are sorted by time in list.

Refresh and update list of theme channel events after update of theme channel data. Removed theme channel events no longer visible and available. Related non-archived recordings will be removed. Getting focus preview of focused entry starts automatically if focused entry is a recorded linear or nonlinear theme channel event. The new playback position changed by preview will be not stored. An Icon shows the state of theme channel event:
Scheduled for recording, recording, recorded, not recorded or something wrong with recording, streaming, not recorded linear theme channel events or something wrong with recording are shown in list disabled (gray).

### Presentation of theme channel events in state overview

Nonlinear or Linear subscribed (if recording or recorded) theme channel event time line state now: show current event is playback;
time line state next: show next (following of current event) event from list;
time line state time: no information;

Linear unsubscribed theme channel event: presentation like regular event.

### Entering

Entering dialog the current used or running theme channel event will be focused in list of theme channel events if possible or the first entry will be focused as default.

### Leaving

'OK' button to leave dialog EPG with selected theme channel event. The theme channel event starts from last stored view position independent from current position of previewing in dialog EPG. 'Back' button to leave dialog EPG and return to dialog Zapping without changed selected theme channel event. The theme channel event which was used before entering dialog EPG will be continued.

### Internal navigation using buttons

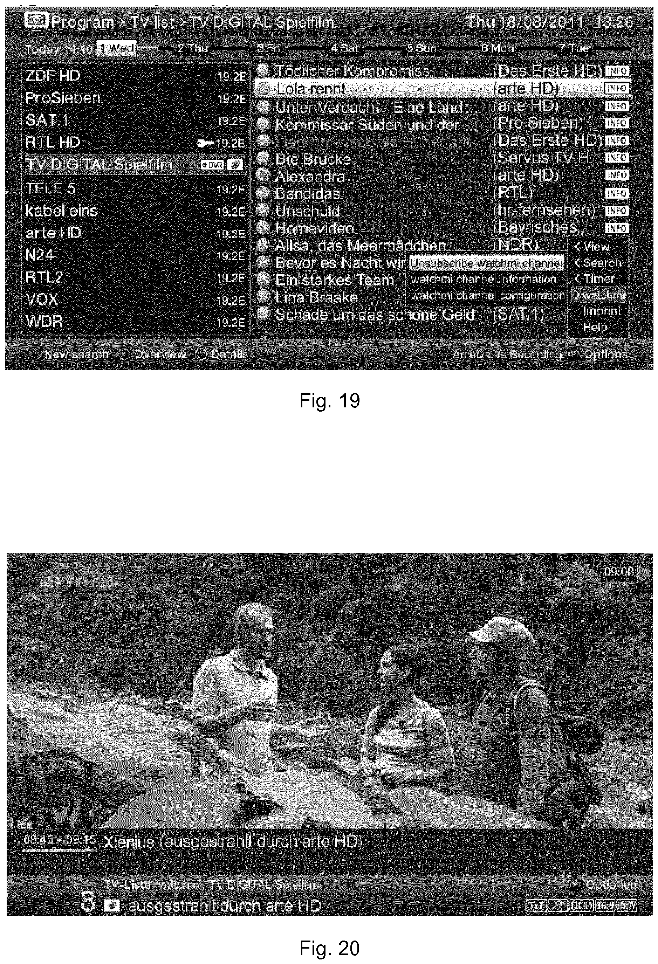

If event list is focused 'Archive as recording' button to save/store selected theme channel event like regular DVR recording. This function is only available for linear theme channel events which not yet are archived to DVR. If theme channel is focused footer 'REC' button to subscribe/unsubscribed selected theme channel (only available for linear theme channels). 'Info' button if theme channel is focused on left list to change into view state theme channel information/details to show more detailed information about selected focused theme channel. 'Info' button if theme channel event is focused on right list to change into state details to show more detailed information about selected theme channel event. Internal navigation using option menu view: See fig. 19 When being on a theme channel, a new option submenu 'hybrid channel' is available. Option menu is dynamic and depends on, if focus is on left or right list.

The following options are always available:
'Option menu > hybrid channel > hybrid channel information' to change into view state theme channel information/details to show more detailed information about selected focused theme channel.
'Option menu > hybrid channel > hybrid channel configuration' to change to view hybrid channel configuration. For more details to configure hybrid channels see section hybrid channel configuration.

The following options are furthermore available on left list:
'Option menu > hybrid channel > Subscribe/Unsubscribed hybrid channel' to subscribe/unsubscribed selected theme channel (only available for linear theme channels). If the selected theme channel is not yet subscribed function 'Subscribe theme channel' is available else the function 'Unsubscribed hybrid channel' is available.

The following options are furthermore available on right list:
'Option menu > hybrid channel > Archive as recording' with same functionality as the Rec-button described above. (For all recorded or future events available, not for non-recorded events in the past).
'Option menu > hybrid channel > Select/Deselect event' to enable/disable recording for the currently selected event. (Only available if event is in future). This functionality shall also be available with the hidden shortcut 'Stop' button.

### TV/radio presentation

### Intention

This section describes the changes for TV/radio presentation (Spec-SW-APP-UI-OSD2010-TV_radio_presentation). For TV/radio presentation, there are 3 main states:
Nonsubscribed, linear theme channels: You can watch an event on a theme channel, if it is currently presented.
Subscribed, linear theme channels: You can watch events from a theme channel, if one is current presented or if they were recorded in the past.
Nonlinear theme channels: These are events collected on an Internet server and transmitted over Internet.

These three states are described below.

All States:
The entering/leaving behaviour for theme channels as well as the new status menu is same for all three types.

### Entering

Zap to a theme channel as part of the current zapping list.

### Leaving

Zap to any other channel of that list, this can be another theme channel or any other type of channel in that list, leave TV/radio presenting state.

### Internal Navigation

'Rec' button starts a recoding for that event. The recoding ends, if the event ends.

In option menu submenu "Status" the content depends now on the current content:
For linear live content, the entries are same as for TV live presentation:
   Transponder/Channel, Audio/Video, CA, and Programme:
For linear playback content, the entries are same as for DVR playbacks:
   One single status page "Audio/Video"
For non-linear content, the entries are same as for Internet pages:
   General, Security

### Nonsubscribed, linear theme channels

### Intention

Nonsubscribed, linear theme channels: you can only watch an event on a theme channel, if it is currently presented.

### Behaviour: the behaviour is similar to existing channels

### Views

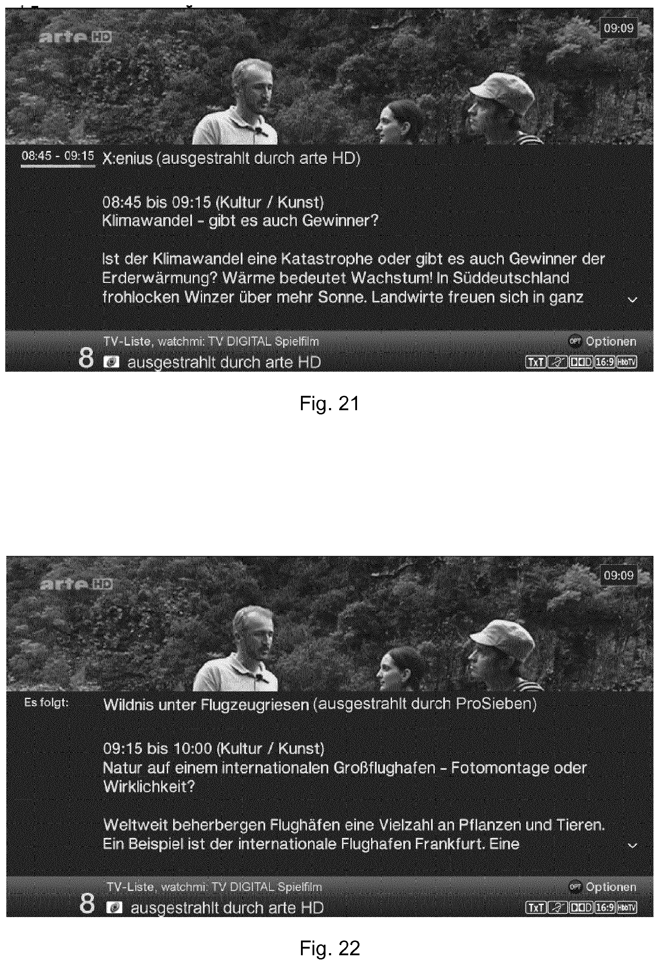

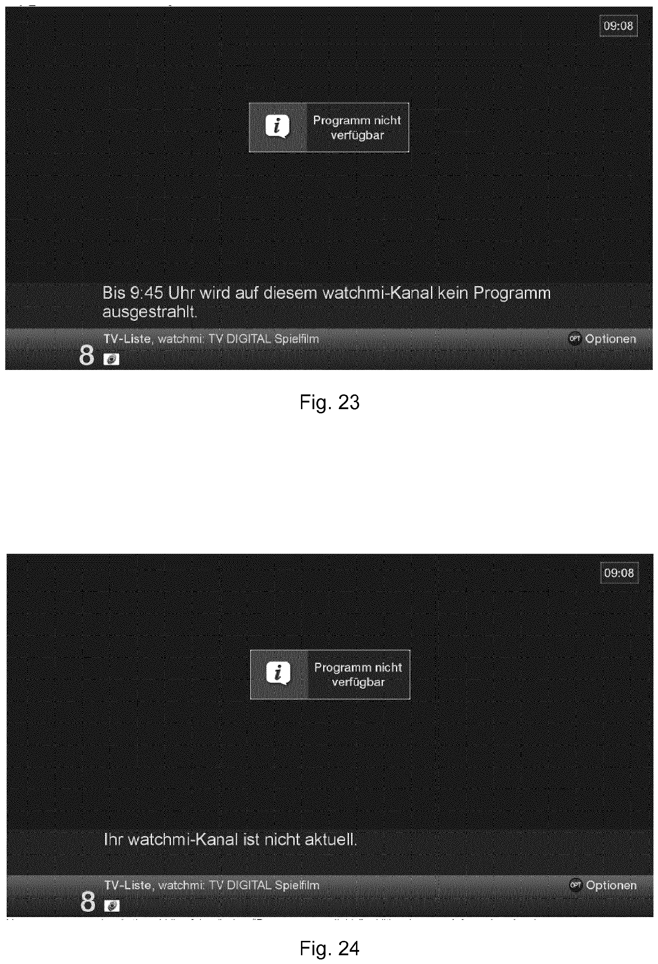

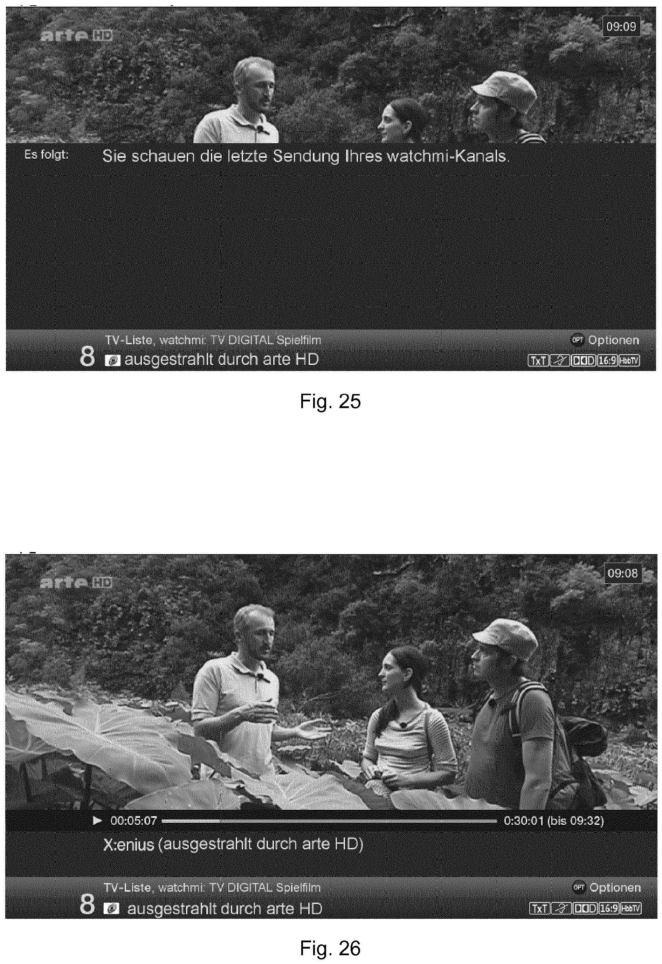

There is an icon on the last line meaning - this is a nonsubscribed theme channel. All other information is similar to live content in TV-List.
Info banner Short: See fig. 20
Info banner Long - current: See fig. 21
Info banner Long -following: See fig. 22
   There is an icon on the last line meaning - this is a nonsubscibed theme channel. All other information is similar to live content in TV-List.
Info banner - if you have no event on this time but an event in future: See fig. 23
   You get a message box in the middle of the display: "Program not available". Additionally you get information, on which time you can watch TV on this channel again.
Info banner - if you have no event on this time and no event in future: See fig. 24
   You get a message box in the middle of the display: "Program not available" additional you get information, that there are no more events on this channel.
Info banner - if you have a current event but no event in future: See fig. 25
   In place of event data you get information, that no more events are available.

### Subscribed, linear theme channels

### Intention

Subscribed, linear theme channels: you can watch a event on a theme channel, if it will be recorded at the moment or it was recorded in the past. The number of recorded events is limited in count. You can jump to previous event or to next event direct in zapping. There are 2 seek positions:
Seek to the last visited event,
seek to the last position into the last visited event.

A new seek position will be valid if you stay at least 3s on this channel, means if you zap over the channel the seek position will not be changed. If you want to watch an event, whose seek position is on the end, its starts from the beginning automatically. It is possible, to show a current and a following event in Info banner.

### Views

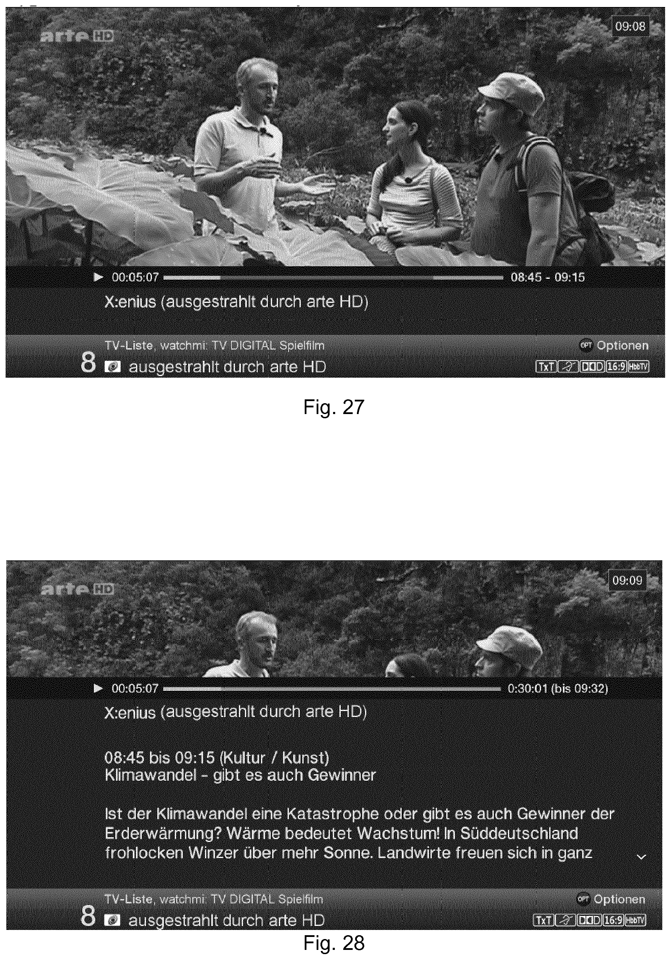

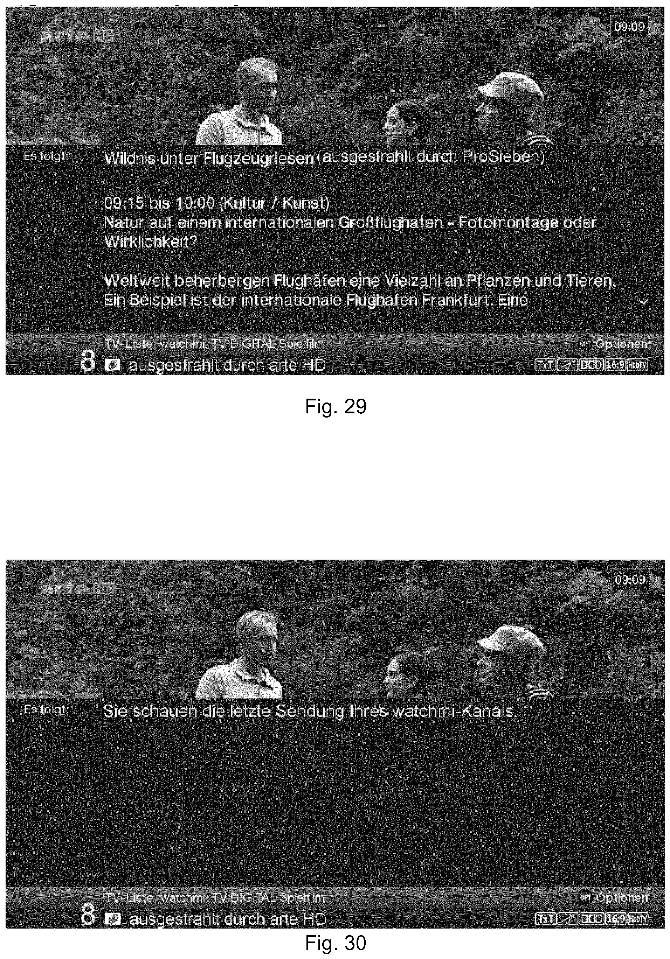

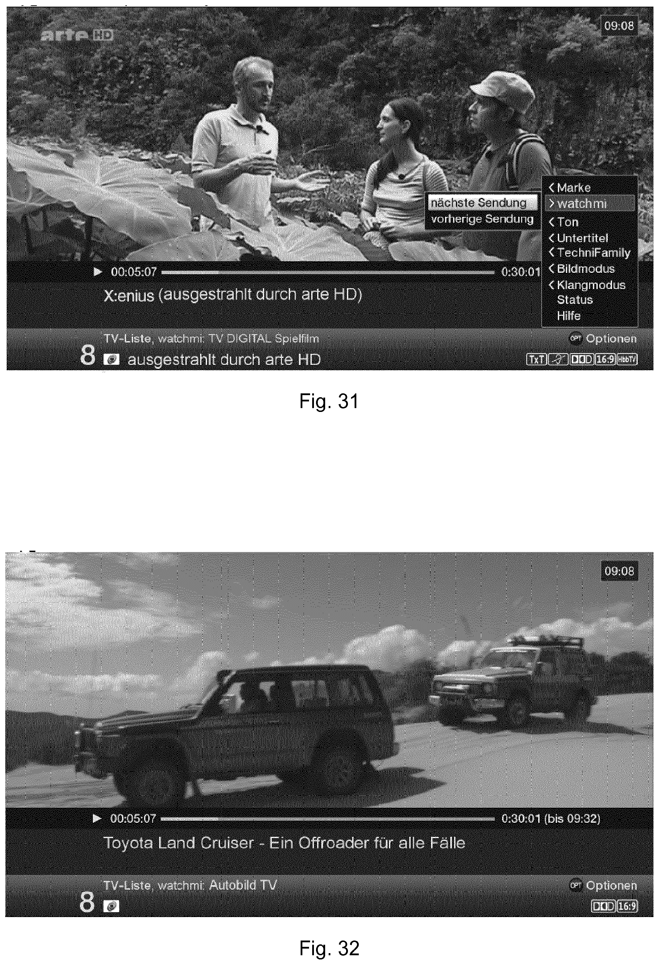

There is an icon on the last line meaning - this is a subscribed Theme channel. The general information is similar to live content in TV-List. Info banner Short - the event has been recorded: See fig. 26. The event and progress content are similar to a playback. Info banner Short - the event is currently recorded: See fig. 27. The event and progress content are similar to a time shift with end time. Info banner Long - current: See fig. 28. The event and progress content are similar to a playback. Info banner Long - following: See fig. 29. This is a new presentation. Info banner - if you have a current event but no event in future: See fig. 30. The information is similar to nonsubscibed Theme channel. New Option menu entry "hybrid channel": See fig. 31. There is a new item "hybrid channel" in the list. You can seek to the next or previous event of that Theme channel. It only one of them exist, you have only one possibility to seek. If there is only the current Event, the hybrid channel item will no be shown.

### Behaviour

'Rec' button will archive a subscribed event to own recordings. 'Page Up' will seek to next event. 'Page Down' will seek to previous event. 'Rec' (first time) will archive this event, up on second time it will set a bookmark.

### Nonlinear Theme channel

### Intention

The content comes from Internet. You need a valid Internet connection. There are no cache mechanisms for the content. There is no way to store Internet streams.

### Views

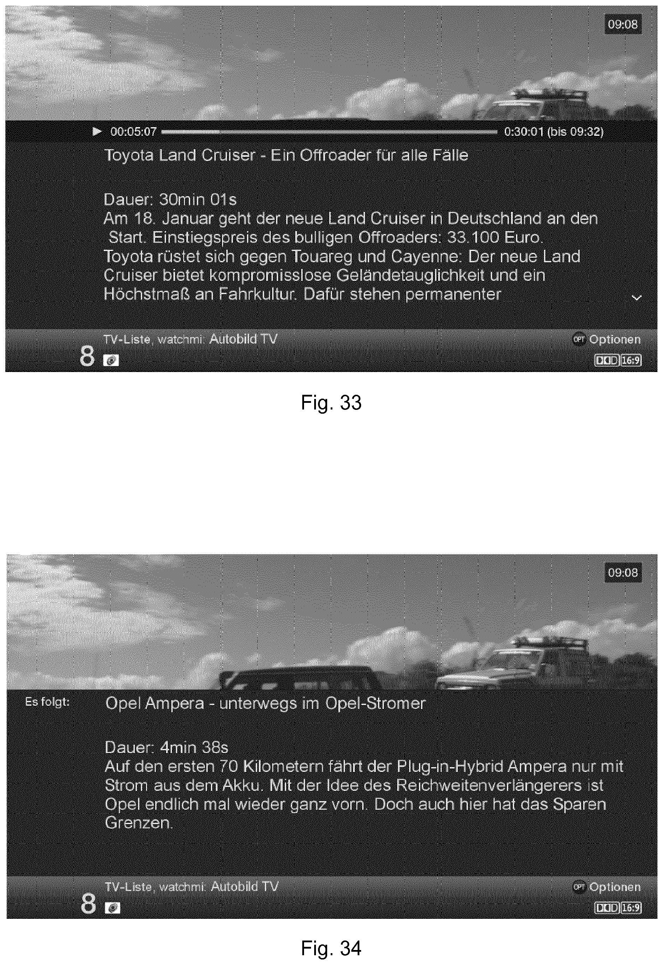

There is an icon on the last line meaning - this is a nonlinear Theme channel. The general information is similar to nonsubscibed linear Theme channel. Info banner Short: See fig. 32. The progress and event information are similar to playback. Info banner Long - current: See fig. 33. The progress bar is similar to playback. The event information contains a new kind of duration line. In this case the duration is the only available information. Info banner Long - following: See fig. 34. The Long info should show the same information for current and following event:
Means duration and information in both cases.

### Behaviour

'Page Up' will seek to next event. 'Page Down' will seek to previous event. 'Rec' is impossible; you will get a message 'Recording is impossible for Nonlinear Theme channels', The message will be hidden after 5s. A new option menu entry "hybrid channel" is available; see also section "Subscribed, linear theme channels". Corresponding help entry is added in the same manner. Possible Internet connection errors or missing following event will be presented like linear theme channels without current respective following event. There is always a current event.

### TV/radio navigation

### Intention

The existing TV/radio navigation states are extended with hybrid channel information to distinguish between normal services and hybrid channels.

### State navigation

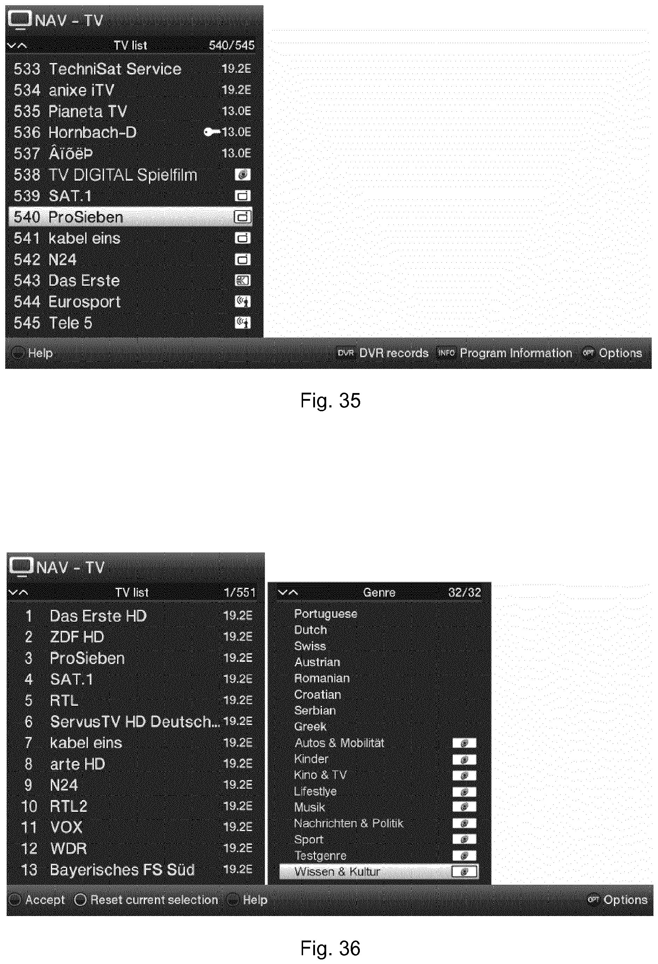

### Views: See fig. 35

### Behaviour:

The source symbol is shown at the right column of the list with the corresponding source symbol now in all cases. Hybrid channels are marked with their channel symbol (in example picture "TV DIGITAL Spielfilm"). Genre filters are extended by theme channel genres. (See chapter "Filter selection"). State info:
Analogue to TV/radio presentation, user is informed with a special text, if no current event is available:
"There is no event on this theme channel till 9:45 am." - If there is a following event. "Your theme channel is not up to date." - If there is no following event.

### Filter selection

### Intention

Hybrid channels become a part of the TV/radio lists so it might be hard to find them in a list of >500 services. Hybrid channel data contains genre information in the same manner as the already existing ISIPRO genres. Thus, the list of genre filters is extended by the hybrid channel genres so user can easily find hybrid channels. Furthermore the TV/radio lists can be filtered to hybrid channels only, using the new signal source filter.

### Main State

### Views

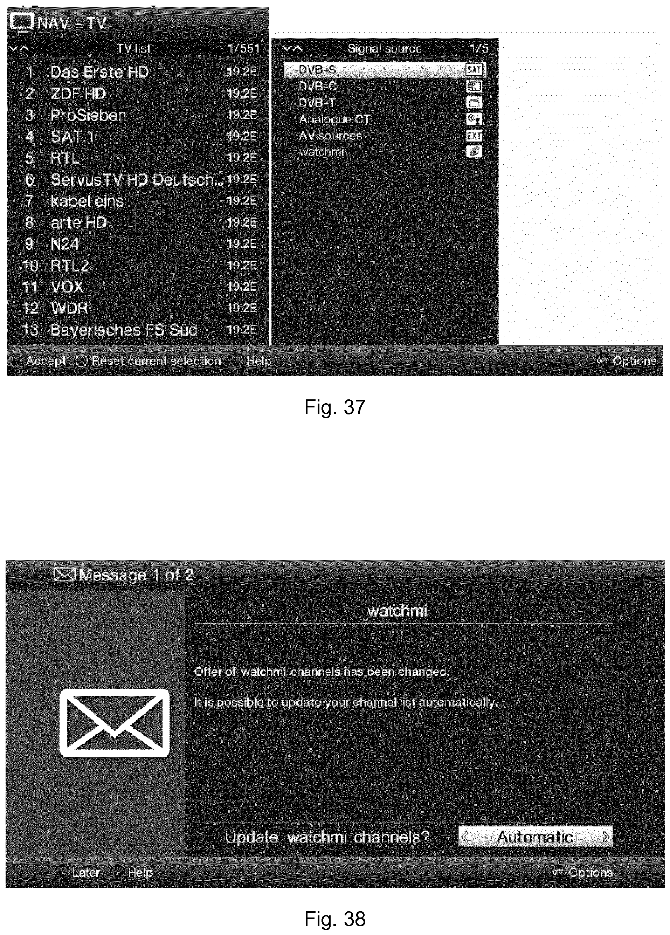

Hybrid channel genre filters: See fig. 36
Hybrid channel signal source filter: See fig. 37

### Behaviour

The list of genre filters in TV/radio world is extended by genre filters for hybrid theme channels.

List of genres is sorted in the following way:
1. TV/radio genres first sorted by priority, second alphabetically.
2. Theme channel genres according to the invention first sorted by priority, second alphabetically.

To distinguish TV/radio filter from hybrid channel filters, the latter are marked with a respective symbol. (In example picture done for "Lifestyle")

The list of signal source filters is extended by hybrid channel filter that reduces the list to hybrid channels only. The signal source symbol is added for all signal sources. The hybrid channel source filter gets its own hybrid channel symbol.

### Message service

### Intention

The update data will be downloaded in defined intervals while the device is switched on or at system timer while the device is switched off. If there are deleted or new theme channels, the message service dialog (Spec-SW-APP-UI-OSD2010-Message_Services) will be shown after the next device start up. "Deleted" are channels which were found in the database (All Channels) but not in the theme channel section of update download. "New" are channels which were not found in the database (All Channels) but in the theme channel section of update download. The changes are resulting in following states:

### Intro step

### Intention

In this step, the user is able to decide the handling of the hybrid channel update. There are 3 options available:
Automatic: the update will progress automatically without user influence (see Automatic step).
Manual: the user is able to influence the update. It will show the Remove step and New step.
Later: the dialog will be finished. It will start at the next start-up of the device.

### Views: See fig. 38

With the operation button (bottom right) the user can choose the 3 option: Automatic, Manual and Later

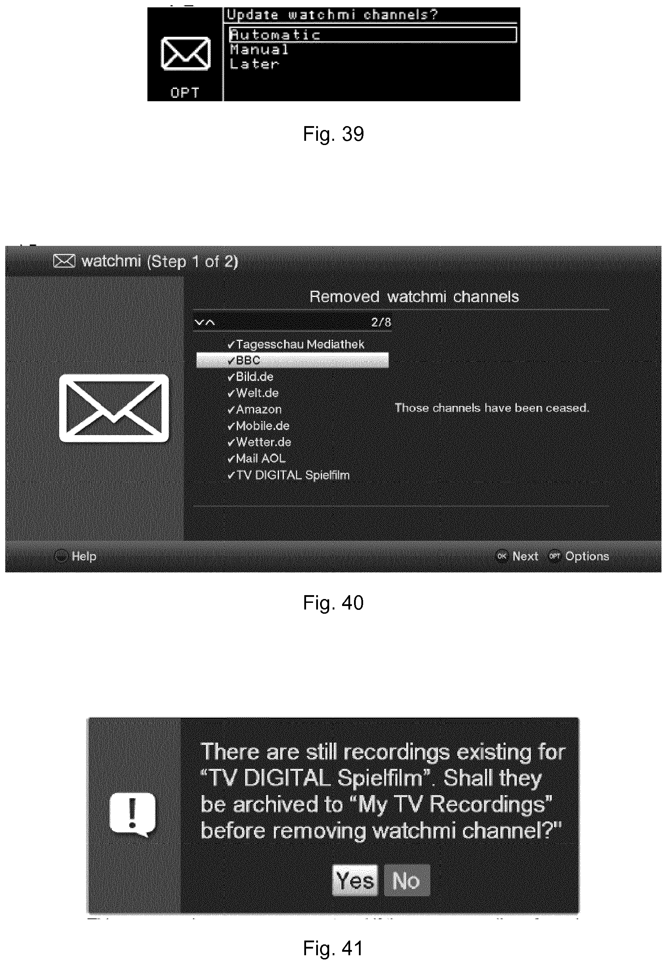

### Display: See fig. 39

Shows the content of the operation button
Navigation with buttons UP and DOWN is possible

### Data management

Initial values: The default value of the operation button and the option menu is automatic

### Behaviour

### Entering

Always open at the first entry of message service - hybrid channels

### Internal navigation

Operation button: Automatic / Option menu: Automatic
=> Automatic step => Finish step

Operation button: Manual / Option menu: Manual
=> Remove step

Option menu: Help / Shortcut: Blue
=> append help dialog

### Leaving (message)

Operation button: Later / Option menu: Later

### Dependencies

The manual update modus depends on the currently active favourite list (TV list 1-4). The user can see and influence only the channels from this list. The channels of other lists will be updated automatically.

### Automatic step

### Intention

Updating all theme channels automatically without user influence

Views: This process takes only few seconds. It will be shown "please wait" on the screen.

### Behaviour

Deleted theme channels will be removed from the favourite lists and database.

New theme channel will be added at the end of the current chosen favourite list.

### Internal navigation

After updating, the Finish step will be entered

In case of no successful update, a failure message will be shown in the Finish step

### Remove step

### Intention

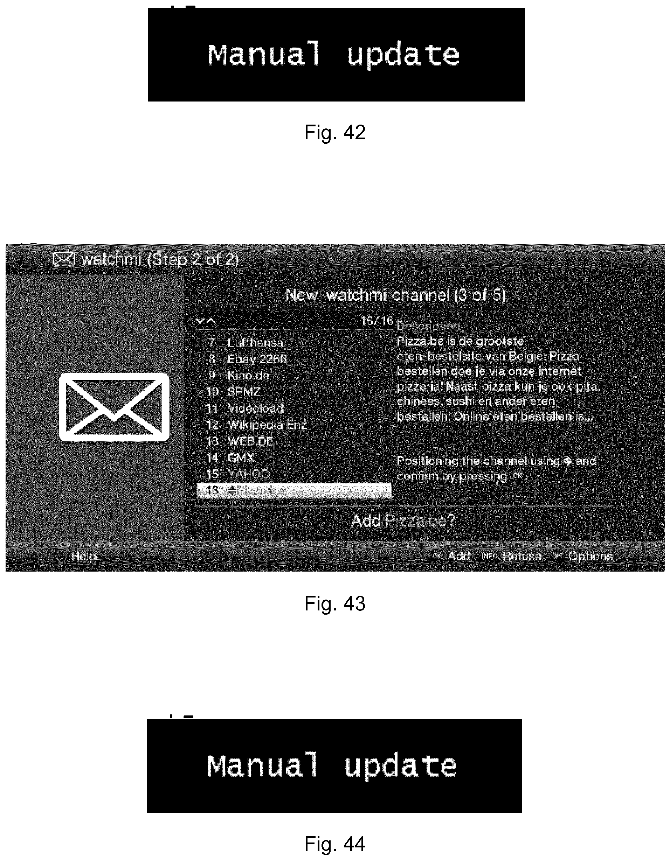

In this page the user will be informed about the deleted theme channels. If there are recordings for a deleted channel, the user can decide if he wants to archive them. If there are no deleted theme channels, this step will be skipped. Only used while manual update. Views: See fig. 40. The view consists of following parts:
Left: list of all removed theme channels of current activated TV/radio list,
The message box in fig. 41 appears on next and if there are recordings for a deleted theme channel.
Display: See fig. 42

### Behaviour:

The user can only accept the erasing. After leaving this page, the changes will store in the database

### Internal navigation

Shortcut: OK / Option menu: Next =>
Recordings for any theme channel =>
   Yes => archive recording in my recording and remove theme channel
   No => remove theme channel and recordings
No Recording for delete theme channel => remove theme channels
=> New step
   Shortcut: Blue => help dialog

### New step

### Intention

In this step, the user can decide which new theme channels shall be stored in the current activated favourite list. The user can also decide on which position the link shall be inserted in the list.

### Views: See fig. 43

The view consists of following parts:
Left: the currently activated favorite list.

New inserted theme channels are orange. The current new theme channel is coupled with the cursor. In this way the user can define the position in the list.
Top right: description memo with information about the new theme channel which shall be inserted in the list

### Display "Manual Update": See fig. 44

### Behaviour:

The new theme channels appear step by step at the end of list.

### Internal navigation

Positioning the new theme channel
Up and down button => one step up or down
Page up and page down => one page up or down
Digit buttons => jump to entered list position

Option menu: Add / Shortcut: OK
=> Insert theme channel at chosen position. Continue with next.
Option menu: Refuse / Shortcut: INFO
   => The theme channel will not be inserted in the favourite list. But it will be inserted in the database (All Channels). Continue with next.
Option menu: Add automatically / Add rest automatically => all following theme channels will be add at the end position. Continue with Finish step.
Option menu: Refuse all/rest => No following theme channels will be inserted in the favourite list. Continue with Finish step.
Option menu: Help / Shortcut: Blue => Open help dialog
If the last theme channel was inserted or refused, the dialog continues with Finish step

### Finish step

### Intention

This step informs the user about successful or failed update.

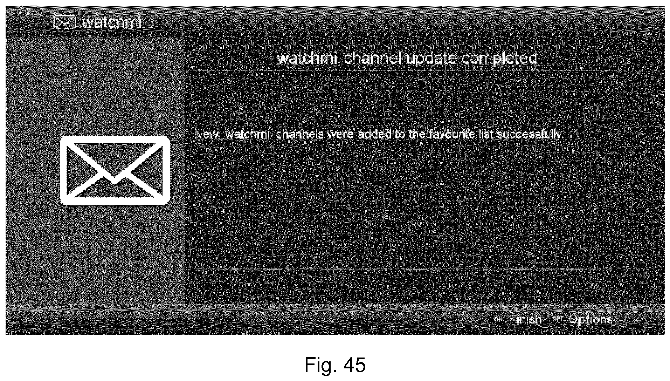

### Views: See fig. 45

This view consists of a subject line and a message text

Display: Subject text is shows in the header line; Message text is shown in the memo area.

### Data management

Persistent data: Storing the changes to the database persistently

### Behaviour

There are the following finish messages:
Update was successful.
   Subject: "Theme channel update completed"
Message: "New theme channels were added to the favourite list successfully."

Too much channels. Not enough space in database.
Subject: "Theme channel update aborted!"
Message: "The update was aborted because TV list is full."

### Leaving (message)

Possibilities to finish
Shortcut: OK
Option menu: Finish
Timer: 5 Seconds after change to Finish step (only after successful update)

## Claims

1. An electronic media client comprising, as a component, an electronic media content guide, the electronic media content guide comprising:
a data interface configured for receiving content information data from a plurality of media content sources,
a graphical interface generator configured for generating a graphical user interface for displaying information about media content sources and media content items,
a user input interface configured for receiving user inputs,
a media storage and playback controller,
wherein the graphical interface generator is further configured to generate a representation of media content sources comprising at least one real media content source and at least one virtual media content source,
wherein the graphical interface generator is further configured to generate a representation of a plurality of media content items of the at least one real media content source and a representation of a plurality of media content items of the at least one virtual media content source,
wherein the graphical interface generator is further configured to generate a representation of information about media content items of the plurality of media content items of the at least one real media content source and the at least one virtual media content source,
wherein the media content items of the represented real media content source derive from the respective real media content source and the media content items of the represented virtual media content source derive from a plurality of real media content sources and pertain to media content items related to at least one theme, wherein the graphical interface generator is further configured that the virtual content sources and real content sources are displayable in a unified list;
**characterised in that** the electronic media client has playback capabilities regarding a file format or a codec of media content items suitable for playback at the electronic media client and is configured for sending information indicative of the playback capabilities of the electronic media client via the data interface to a content management system, or for sending a request for converting any particular media content item into a format that is in accordance with the playback capabilities to an electronic media server.

2. The electronic media client of claim 1, **characterized in that** the graphical interface generator is operatively connected to a recommender engine, wherein the recommender engine is configured to determine which media content item is related to a particular theme.

3. The electronic media client of claim 1 or 2, **characterized in that** the graphical interface generator is further configured for displaying preset user commands for being selected by an individual user.

4. The electronic media client of claim 3, **characterized in that** the graphical interface is further configured to display a cursor, frame and/or cross-hair, wherein the user interface is configured to navigate the cursor, frame and/or cross-hair for selecting a displayed preset user command or placeholder referring to a preset user command.

5. The electronic media client of claim 4, **characterized in that** the user interface is further configured to navigate the cursor, frame and/or cross-hair by being pointed at a respective position of display device.

6. The electronic media client of any of claims 1 to 5, **characterized in that** the electronic media content guide is configured for automatically scheduling and initiating a recording session for recording an electronic media content item during transmission.

7. The electronic media client of claim 6, **characterized in that** the electronic media content guide is configured for overruling scheduled recording procedures by deactivating the automatic recording and/or programming an alternative recording timer due to a respective user interaction.

8. The electronic media client of claim 6 or 7, **characterized in that** the graphical interface generator is further configured to display a notification message when scheduled recording sessions would take place at least partly simultaneously.

9. The electronic media client of any of claims 1 to 8, **characterized in that** the electronic media content guide is further configured for automatically updating representations of media content sources, media content items and information about media content items.

10. The electronic media client of any of claims 1 to 9, **characterized in that** a recommender engine is configured to generate a list of media content items of at least one real media source for the individual user to generate a new virtual media content source or to be added to an already existing virtual media content source.

11. The electronic media client of claim 10, **characterized in that** the recommender engine is further configured for generating the new virtual media content source by the media content items from the list of media content items and for adding the media content items to the existing virtual media content source automatically.

12. The electronic media client of any of claims 2 to 11, **characterized in that** the user interface is further configured for enabling an individual to rate media content items, wherein the rating of the media content items is considered by the recommender engine.

13. The electronic media client of any of claims 1 to 12, **characterized in that** the graphical interface is further configured to merge at least two virtual media content sources to a merged virtual media content source.

14. The electronic media client of any of claims 1 to 13, **characterized in that** the electronic media guide is further configured for providing virtual media content sources generated for at least one individual user to at least one other individual user.

15. The electronic media client of any of claims 1 to 14, **characterized in that** the graphical interface is further configured to provide a predefined user command for playing a selected media content item, wherein the electronic media content guide is configured to store a current play position when the individual user interrupts playing the selected media content item.

## Patentansprüche

1. Ein elektronischer Medien-Client, der als eine Komponente einen elektronischen Medieninhaltsführer aufweist, wobei der elektronische Medieninhaltsführer umfasst:
eine Datenschnittstelle, die zum Empfangen von Inhaltsinformationsdaten von einer Vielzahl von Medieninhaltsquellen ausgebildet ist,
einen Grafikschnittstellengenerator, der zum Erzeugen einer grafischen Benutzerschnittstelle zum Anzeigen von Informationen über Medieninhaltsquellen und Medieninhaltselementen ausgebildet ist,
eine Benutzereingabeschnittstelle, die für den Empfang von Benutzereingaben ausgebildet ist,
eine Medienspeicher- und Wiedergabesteuereinheit,
wobei der Grafikschnittstellengenerator ferner ausgebildet ist, eine Darstellung von Medieninhaltsquellen, die mindestens eine reale Medieninhaltsquelle und mindestens eine virtuelle Medieninhaltsquelle umfassen, zu erzeugen,
wobei der Grafikschnittstellengenerator ferner ausgebildet ist, eine Darstellung einer Vielzahl von Medieninhaltselementen der mindestens einen realen Medieninhaltsquelle und
eine Darstellung einer Vielzahl von Medieninhaltselementen der mindestens einen virtuellen Medieninhaltsquelle zu erzeugen,
wobei der Grafikschnittstellengenerator ferner ausgebildet ist, eine Darstellung von Informationen betreffend Medieninhaltselementen der Vielzahl von Medieninhaltselementen der mindestens einen realen Medieninhaltsquelle und der mindestens einen virtuellen Medieninhaltsquelle zu erzeugen,
wobei die Medieninhaltselemente der dargestellten realen Medieninhaltsquelle von der entsprechenden realen Medieninhaltsquelle stammen und die Medieninhaltselemente der dargestellten virtuellen Medieninhaltsquelle aus einer Vielzahl von realen Medieninhaltsquellen stammen und Medieninhaltselemente betreffen, die sich auf mindestens ein Thema beziehen,
wobei der Grafikschnittstellengenerator ferner ausgebildet ist, dass virtuelle Inhaltsquellen und reale Inhaltsquellen in einer einheitlichen Liste darstellbar sind;
**dadurch gekennzeichnet, dass**
der elektronische Medien-Client über Wiedergabefähigkeiten bezüglich eines Dateiformats oder eines Codecs von Medieninhaltselementen, die für die Wiedergabe auf dem elektronischen Medien-Client geeignet sind, verfügt und ausgebildet ist, Informationen betreffend die Wiedergabefähigkeiten des elektronischen Medien-Clients über die Datenschnittstelle an ein Content-Management-System zu senden, oder zum Senden einer Anforderung zum Konvertieren eines Medieninhaltselements in ein Format, das mit den Wiedergabefähigkeiten übereinstimmt, an einen elektronischen Media-Server.

2. Elektronischer Medien-Client nach Anspruch 1, **dadurch gekennzeichnet, dass** der Grafikschnittstellengenerator operativ mit einer Recommender-Engine verbunden ist, wobei die Recommender-Engine ausgebildet ist, herauszufinden, welches Medieninhaltselement einem bestimmten Thema zugehörig ist.

3. Elektronischer Medien-Client nach Anspruch 1 oder 2, **dadurch gekennzeichnet, dass** der Grafikschnittstellengenerator ausgebildet ist, voreingestellte Benutzerbefehle zur Auswahl durch einen individuellen Benutzer darzustellen.

4. Elektronischer Medien-Client nach Anspruch 3, durch gekennzeichnet, dass die grafische Schnittstelle ferner ausgebildet ist, einen Cursor, Rahmen, und/oder Fadenkreuz anzuzeigen, wobei die Benutzerschnittstelle ausgebildet ist, den Cursor, den Rahmen und/oder das Fadenkreuz zur Auswahl eines dargestellten voreingestellten Benutzerbefehls oder eines Platzhalters, der sich auf einen voreingestellten Benutzerbefehl bezieht, zu bewegen.

5. Elektronischer Medien-Client nach Anspruch 4, **dadurch gekennzeichnet, dass** die Benutzeroberfläche ferner konfiguriert ist, den Cursor, den Rahmen und/oder das Fadenkreuz durch Zeigen auf eine entsprechende Position der Anzeigevorrichtung zu bewegen.

6. Elektronischer Medien-Client nach einem der Ansprüche 1 bis 5, **dadurch gekennzeichnet, dass** der elektronische Medieninhaltsführerzum automatischen Planen und Initiieren einer Aufnahmesitzung zur Aufnahme eines elektronischen Medieninhaltselements während der Übertragung ausgebildet ist.

7. Elektronischer Medien-Client nach Anspruch 6, **dadurch gekennzeichnet, dass** der elektronische Medieninhaltsführer zum Aufheben von geplante Aufnahmeabläufen durch Deaktivieren der automatischen Aufnahme und/oder zum Programmieren eines alternativen Aufnahme-Timers aufgrund einer entsprechenden Benutzerinteraktion ausgebildet ist.

8. Elektronischer Medien-Client nach Anspruch 6 oder 7, **dadurch gekennzeichnet, dass** der Grafikschnittstellengenerator ferner ausgebildet ist, eine Benachrichtigungsmeldung anzuzeigen, wenn geplante Aufnahmesitzungen zumindest teilweise gleichzeitig stattfinden würden.

9. Elektronischer Medien-Client nach einem der Ansprüche 1 bis 8, **dadurch gekennzeichnet, dass** der elektronische Medieninhaltsführer ferner zum automatischen Aktualisieren von Darstellungen von Medieninhaltsquellen, Medieninhaltselementen und Information betreffend Medieninhaltselementen ausgebildet ist.

10. Elektronischer Medien-Client nach einem der Ansprüche 1 bis 9, **dadurch gekennzeichnet, dass** eine Recommender-Engine ausgebildet ist, eine Liste von Medieninhaltselementen wenigstens einer realen Medienquelle für ein Erstellen einer neuen virtuellen Medieninhaltsquelle oder für ein Hinzufügen zu einer bereits existierenden virtuellen Medieninhaltsquelle durch den individuellen Benutzer zu erzeugen.

11. Elektronischer Medien-Client nach Anspruch 10, **dadurch gekennzeichnet, dass** die Recommender-Engine ferner zum automatischen Erzeugen der neuen virtuellen Medieninhaltsquelle durch die Medieninhaltselemente von der Liste der Medieninhaltselemente und zum Hinzufügen der Medieninhaltselemente zu der existierenden virtuellen Medieninhaltsquelle ausgebildet ist.

12. Elektronischer Medien-Client nach einem der Ansprüche 2 bis 11, **dadurch gekennzeichnet, dass** die Benutzerschnittstelle ferner ausgebildet ist, ein Individuum zu befähigen Medieninhaltselemente zu bewerten, wobei die Bewertungen der Medieninhaltselemente von der Recommender-Engine mit berücksichtigt werden.

13. Elektronischer Medien-Client nach einem der Ansprüche 1 bis 12, **dadurch gekennzeichnet, dass** die grafische Schnittstelle ausgebildet ist, mindestens zwei virtuelle Medieninhaltsquellen zu einer zusammengeführten virtuellen Medieninhaltsquelle zusammenzuführen.

14. Elektronischer Medien-Client nach einem der Ansprüche 1 bis 13, **dadurch gekennzeichnet, dass** der elektronische Medienführer ferner ausgebildet ist, für mindestens einen Benutzer erzeugte virtuelle Medieninhaltsquellen mindestens einem anderen Benutzer zur Verfügung zu stellen.

15. Elektronischer Medien-Client nach einem der Ansprüche 1 bis 14, **dadurch gekennzeichnet, dass** die grafische Schnittstelle ferner ausgebildet ist, einen vordefinierten Benutzerbefehl zum Abspielen eines ausgewählten Medieninhaltselements bereitzustellen, wobei der elektronische Medieninhaltsführer ausgebildet ist, eine aktuelle Wiedergabeposition zu speichern, wenn der individuelle Benutzer die Wiedergabe des ausgewählten Medieninhaltselements unterbricht.

## Revendications

1. Client multimédia électronique comprenant, comme composant , un guide de contenu multimédia électronique , le guide de contenu multimédia électronique comprenant :
une interface de données configurée pour recevoir des données d 'information de contenu d'une pluralité de sources de contenu multimédia ,
un créateur d'interface graphique configuré pour créer une interface graphique d'utilisateur afin d 'afficher de l'information sur des sources de contenu multimédia et des éléments de contenu multimédia ,
une interface utilisateur d 'entrée configurée pour recevoir des entrées d 'utilisateur,
une unité de commande de la mémorisation et de la reproduction multimédia ,
dans lequel le créateur d 'interface graphique est configuré en outre pour créer une représentation de sources de contenu multimédia comprenant au moins une source réelle de contenu multimédia et au moins une source virtuelle de contenu multimédia ,
dans lequel le créateur d'interface graphique est configuré en outre pour créer une représentation d'une pluralité d 'éléments de contenu multimédia de la au moins une source réelle de contenu multimédia et une représentation d'une pluralité d 'éléments de contenu multimédia de la au moins une source virtuelle de contenu multimédia ,
dans lequel le créateur d'interface graphique est configuré en outre pour créer une représentation d'information sur des éléments de contenu multimédia de la pluralité d'éléments de contenu multimédia de la au moins une source réelle et contenu multimédia et de la au moins une source virtuelle de contenu multimédia ,
dans lequel les éléments de contenu multimédia de la source réelle de contenu multimédia représentée dérivent de la source réelle de contenu multimédia respective et les éléments de contenu multimédia de la source virtuelle de contenu multimédia représentée dérivent d'une pluralité de sources réelles de contenu multimédia et appartiennent à des éléments de contenu multimédia se rapportant à au moins un thème ,
dans lequel le créateur d'interface graphique est configuré en outre de manière à pouvoir afficher en une liste unifiée les sources virtuelles de contenu et les sources réelles de contenu ;
**caractérisé en ce que**
le client multimédia électronique a des capacités de reproduction concernant un format de fichier ou un codec d 'éléments de contenu multimédia propre à la reproduction au client multimédia électronique et est configuré pour envoyer de l 'information indicatrice des capacités de reproduction du client multimédia électronique par l 'intermédiaire de l 'interface de données à un système de gestion de contenu , ou pour envoyer une demande de transformation de tout élément de contenu multimédia particulier en un format , qui est en accord avec les capacités de reproduction , à un serveur multimédia électronique .

2. Client multimédia électronique suivant la revendication 1 , **caractérisé en ce que** le créateur d 'interface graphique est relié fonctionnellement à un moteur de recommandation , le moteur de recommandation étant configuré pour déterminer I 'élément de contenu multimédia qui est en relation avec un thème particulier .

3. Client multimédia électronique suivant la revendication 1 ou 2, **caractérisé en ce que** le créateur d 'interface graphique est configuré en outre pour afficher des instructions d 'utilisateur fixées à l 'avance à sélectionner par un utilisateur individuel .

4. Client multimédia électronique suivant la revendication 3 , **caractérisé en ce que** l'interface graphique est configurée en outre pour afficher un curseur , une trame et/ou un réticule, l'interface d 'utilisateur étant configurée pour faire naviguer le curseur , la trame et/ou le réticule afin de sélectionner une instruction ou un espace réservé d 'utilisateur, fixé à l 'avance et affiché , se rapportant à une instruction d 'utilisateur fixée à l 'avance.

5. Client multimédia électronique suivant la revendication 4, **caractérisé en ce que** l'interface d 'utilisateur est configurée en outre pour faire naviguer le curseur , la trame et/ou le réticule en le pointant sur une position respective des dispositifs d 'affichage.

6. Client multimédia électronique suivant l'une quelconque des revendications 1 à 5 , **caractérisé en ce que** le guide de contenu multimédia électronique est configuré pour prévoir et faire débuter une session d 'enregistrement pour enregistrer un élément de contenu multimédia électronique pendant une transmission .

7. Client multimédia électronique suivant la revendication 6 , **caractérisé en ce que** le guide de contenu multimédia électronique est configuré pour passer outre à des procédures d 'enregistrement prévues , en désactivant l 'enregistrement automatique et/ou en programmant une minuterie d 'enregistrement alternative due à une interaction d 'utilisateur respective .

8. Client multimédia électronique suivant la revendication 6 ou 7, **caractérisé en ce que** le créateur d 'interface graphique est configuré en outre pour afficher un message de notification , lorsque des sessions d 'enregistrement prévues auraient lieu au moins en partie simultanément .

9. Client multimédia électronique suivant l'une quelconque des revendications 1 à 8, **caractérisé en ce que** le guide de contenu multimédia électronique est configuré en outre pour mettre à jour automatiquement des représentations de sources de contenu multimédia, d 'éléments de contenu multimédia et de l 'information sur des éléments de contenu multimédia.

10. Client multimédia électronique suivant l'une quelconque des revendication 1 à 9, **caractérisé en ce que** le moteur de recommandation est configuré pour créer une liste d 'éléments de contenu multimédia d'au moins une source réelle multimédia pour l 'utilisateur individuel , afin de créer une nouvelle source virtuelle de contenu multimédia ou pour l 'ajouter à une source virtuelle de contenu multimédia déjà existante .

11. Client multimédia électronique suivant la revendication 10 , **caractérisé en ce que** le moteur de recommandation est configuré en outre pour créer la nouvelle source virtuelle de contenu multimédia par les éléments de contenu multimédia provenant de la liste d 'éléments de contenu multimédia et pour ajouter des éléments de contenu multimédia à la source virtuelle de contenu multimédia existante d'une manière automatique .

12. Client multimédia électronique suivant l'une quelconques des revendications 2 à 11 , **caractérisé en ce que** l'interface d 'utilisateur est configurée en outre pour permettre à un individu de noter des éléments de contenu multimédia , la notation des éléments de contenu multimédia étant prise en considération par le moteur de recommandation .

13. Client multimédia électronique suivant l'une quelconque des revendications 1 à 12, **caractérisé en ce que** l'interface graphique est configurée en outre pour fusionner au moins deux sources virtuelles de contenu multimédia en une source virtuelle fusionnée de contenu multimédia.

14. Client multimédia électronique suivant l'une quelconques des revendications 1 à 13, **caractérisé en ce que** le guide multimédia électronique est configuré en outre pour fournir des sources virtuelles de contenu multimédia créées pour au moins un utilisateur individuel à au moins un autre utilisateur individuel.

15. Client multimédia électronique suivant l'une quelconques des revendications 1 à 14 , **caractérisé en ce que** l'interface graphique est configurée en outre pour fournir une instruction d 'utilisateur définie à l'avance pour faire passer un élément de contenu multimédia sélectionné , le guide de contenu multimédia électronique étant configuré pour mettre en mémoire une position de passage en cours lorsque l'utilisateur individuel fait cesser le passage de I 'élément de contenu multimédia sélectionné .
